(19) Europäisches Patentamt / European Patent Office / Office européen des brevets

(11) **EP 4 618 654 A1**

(12) **EUROPEAN PATENT APPLICATION**
published in accordance with Art. 153(4) EPC

(43) Date of publication:
**17.09.2025 Bulletin 2025/38**

(21) Application number: **23888925.7**

(22) Date of filing: **26.09.2023**

(51) International Patent Classification (IPC):
**H04W 72/04** (2023.01)    **H04L 1/18** (2023.01)
**H04L 27/26** (2006.01)    **H04W 92/18** (2009.01)
**H04W 74/08** (2024.01)    **H04W 16/14** (2009.01)
**H04W 52/34** (2009.01)

(52) Cooperative Patent Classification (CPC):
**H04L 1/18; H04L 27/26; H04W 16/14; H04W 52/34; H04W 72/04; H04W 74/08; H04W 92/18**

(86) International application number:
**PCT/KR2023/014818**

(87) International publication number:
**WO 2024/101661 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.11.2022 KR 20220148218**
             **11.11.2022 KR 20220150678**

(71) Applicant: **LG Electronics Inc.**
**Yeongdeungpo-gu**
**Seoul 07336 (KR)**

(72) Inventors:
- **HWANG, Daesung**
  **Seoul 06772 (KR)**
- **LEE, Seungmin**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR TRANSMITTING NR SIDELINK ACCORDING TO OCCUPIED CHANNEL BANDWIDTH REQUIREMENTS IN UNLICENSED BAND**

(57) Proposed is an operation method of a first device (100) in a wireless communication system. The method may comprise the steps of: determining a PSFCH resource for transmitting at least one PSFCH associated with at least one PSSCH, wherein the PSFCH resource includes a common interlace and at least one dedicated PRB included in a first interlace, the at least one PSSCH is mapped to one or more PRB subsets, and the one or more PRB subsets each include K3 number of PRBs included in the at least one dedicated PRB; and, on the basis of the PSFCH resource, carrying out transmission of the at least one PSFCH.

FIG. 17

determining a PSFCH resource for a transmission of at least one PSFCH related to at least one PSSCH — S1710

derforming a transmission of at least one PSFCH, based on a PSFCH resource — S1720

**Description**

**TECHNICAL FIELD**

This disclosure relates to a wireless communication system.

**BACKGROUND**

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an entity having an infrastructure (or infra) established therein, and so on. The V2X may be spread into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR).

**DISCLOSURE**

**TECHNICAL SOLUTION**

According to an embodiment of the present disclosure, a method for performing, by a first device, wireless communication may be proposed. For example, the method may comprise: determining a physical sidelink feedback channel, PSFCH, resource for a transmission of at least one PSFCH related to at least one physical sidelink shared channel, PSSCH, wherein the PSFCH resource may include at least one dedicated physical resource block, PRB, included in a first interlace and a common interlace, wherein the at least one PSSCH may be mapped to at least one PRB subset, and wherein each of the at least one PRB subset may include K3 PRBs included in the at least one dedicated PRB; and performing the transmission of the at least one PSFCH, based on the PSFCH resource.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: determining a physical sidelink feedback channel, PSFCH, resource for a transmission of at least one PSFCH related to at least one physical sidelink shared channel, PSSCH, wherein the PSFCH resource may include at least one dedicated physical resource block, PRB, included in a first interlace and a common interlace, wherein the at least one PSSCH may be mapped to at least one PRB subset, and wherein each of the at least one PRB subset may include K3 PRBs included in the at least one dedicated PRB; and performing the transmission of the at least one PSFCH, based on the PSFCH resource.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: determining a physical sidelink feedback channel, PSFCH, resource for a transmission of at least one PSFCH related to at least one physical sidelink shared channel, PSSCH, wherein the PSFCH resource ,au include at least one dedicated physical resource block, PRB, included in a first interlace and a common interlace, wherein the at least one PSSCH may be mapped to at least one PRB subset, and wherein each of the at least one PRB subset may include K3 PRBs included in the at least one dedicated PRB; and performing the transmission of the at least one PSFCH, based on the PSFCH resource.

According to an embodiment of the present disclosure, a non-transitory computer-readable storage medium storing instructions may be proposed. For example, the instructions, based on being executed, may cause a first device to: determine a physical sidelink feedback channel, PSFCH, resource for a transmission of at least one PSFCH related to at least one physical sidelink shared channel, PSSCH, wherein the PSFCH resource may include at least one dedicated physical resource block, PRB, included in a first interlace and a common interlace, wherein the at least one PSSCH may be mapped to at least one PRB subset, and wherein each of the at least one PRB subset may include K3 PRBs included in the at least one dedicated PRB; and perform the transmission of the at least one PSFCH, based on the PSFCH resource.

According to an embodiment of the present disclosure, a method for performing, by a second device, wireless communication may be proposed. For example, the method may comprise: transmitting, to a first device, sidelink control information, SCI, for scheduling of a first physical sidelink shared channel, PSSCH, through a physical sidelink control channel, PSCCH; transmitting, to the first device, a medium access control, MAC, protocol data unit, PDU, through the first PSSCH; and receiving a hybrid automatic repeat request, HARQ, feedback for the first PSSCH through a first physical resource block, PRB, subset included in a physical sidelink feedback channel, PSFCH, resource, wherein the first PSSCH may be mapped to the first PRB subset, wherein the first PRB subset may include K3 PRBs included in at least one dedicated PRB, and wherein the PSFCH resource may include the at least dedicated PRB included in a first interlace and a common interlace.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: transmitting, to a first device, sidelink control information, SCI, for scheduling of a first physical sidelink shared channel, PSSCH, through a physical sidelink control channel, PSCCH; transmitting, to the first device, a medium access control, MAC, protocol data unit, PDU, through the first PSSCH; and receiving a hybrid automatic repeat request, HARQ, feedback for the first PSSCH through a first physical resource block, PRB, subset included in a physical sidelink feedback channel, PSFCH, resource, wherein the first PSSCH may be mapped to the first PRB subset, wherein the first PRB subset may include K3 PRBs included in at least one dedicated PRB, and wherein the PSFCH resource may include the at least dedicated PRB included in a first interlace and a common interlace.

## BRIEF DESCRIPTION OF THE DRAWINGS

FIG. 1 shows a communication structure that can be provided in a 6G system, according to one embodiment of the present disclosure.

FIG. 2 shows an electromagnetic spectrum, according to one embodiment of the present disclosure.

FIG. 3 shows a structure of an NR system, based on an embodiment of the present disclosure.

FIG. 4 shows a radio protocol architecture, based on an embodiment of the present disclosure.

FIG. 5 shows a structure of a radio frame of an NR, based on an embodiment of the present disclosure.

FIG. 6 shows a structure of a slot of an NR frame, based on an embodiment of the present disclosure.

FIG. 7 shows an example of a BWP, based on an embodiment of the present disclosure.

FIG. 8 shows a procedure of performing V2X or SL communication by a UE based on a transmission mode, based on an embodiment of the present disclosure.

FIG. 9 shows three cast types, based on an embodiment of the present disclosure.

FIG. 10 shows an example of a wireless communication system supporting an unlicensed band, based on an embodiment of the present disclosure.

FIG. 11 shows a method of occupying resources in an unlicensed band, based on an embodiment of the present disclosure.

FIG. 12 shows a case in which a plurality of LBT-SBs are included in an unlicensed band, based on an embodiment of the present disclosure.

FIG. 13 shows CAP operations performed by a base station to transmit a downlink signal through an unlicensed band, based on an embodiment of the present disclosure.

FIG. 14 shows type 1 CAP operations performed by a UE to transmit an uplink signal, based on an embodiment of the present disclosure.

FIG. 15 shows the structure of a PSFCH resource on an unlicensed band, according to one embodiment of the present disclosure.

FIG. 16 shows PRB subsets to which at least one PSSCH is mapped on an unlicensed band, according to one embodiment of the present disclosure.

FIG. 17 shows a procedure for a first device to perform wireless communication, according to one embodiment of the present disclosure.

FIG. 18 shows a procedure for a second device to perform wireless communication, according to one embodiment of the present disclosure.

FIG. 19 shows a communication system 1, based on an embodiment of the present disclosure.

FIG. 20 shows wireless devices, based on an embodiment of the present disclosure.

FIG. 21 shows a signal process circuit for a transmission signal, based on an embodiment of the present disclosure.

FIG. 22 shows another example of a wireless device, based on an embodiment of the present disclosure.

FIG. 23 shows a hand-held device, based on an embodiment of the present disclosure.

FIG. 24 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".
A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".
In the present disclosure, "at least one of A and B" may mean "only A", "only B", or "both A and B". In addition, in the present disclosure, the expression "at least one of A or B" or "at least one of A and/or B" may be interpreted as "at least one of A and B".
In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".
In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".
In the following description, 'when, if, or in case of' may be replaced with 'based on'.
A technical feature described individually in one figure in the present disclosure may be individually implemented, or may be simultaneously implemented.
In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.
The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with a machine learning capability. The vision of the 6G system can be in four aspects: intelligent connectivity, deep connectivity, holographic connectivity, and ubiquitous connectivity, and the 6G system may satisfy the requirements as shown in Table 1 below. In other words, Table 1 is an example of the requirements of the 6G system.

[Table 1]

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

6G system may have key factors such as eMBB(Enhanced mobile broadband), URLLC(Ultra-reliable low latency communications), mMTC(massive machine-type communication), AI integrated communication, Tactile internet, High throughput, High network capacity, High energy efficiency, Low backhaul and access network congestion, Enhanced data security.

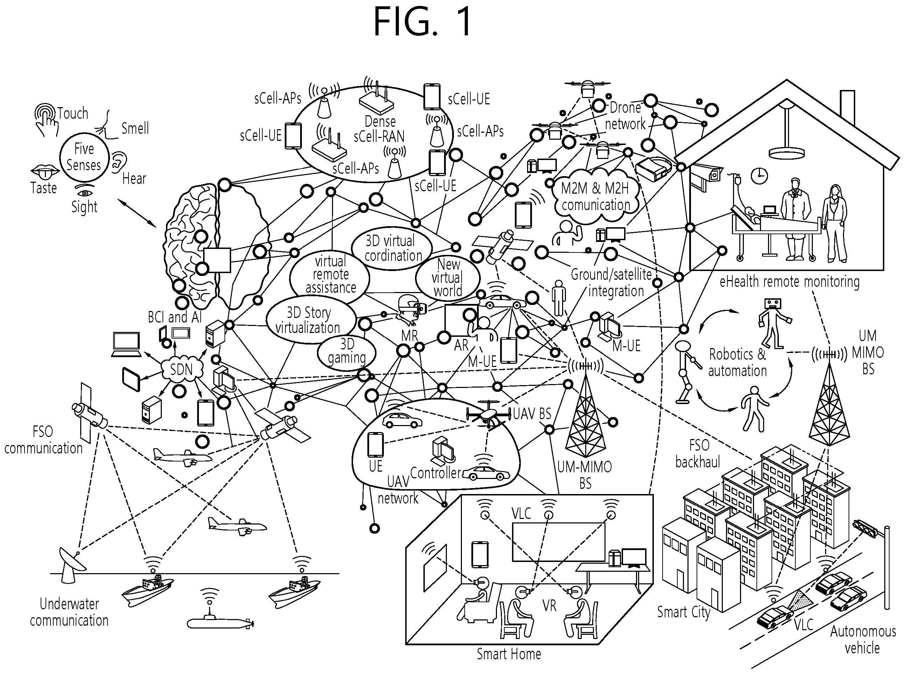

FIG. 1 shows a communication structure that can be provided in a 6G system, according to one embodiment of the present disclosure. The embodiment of FIG. 1 may be combined with various embodiments of the present disclosure.

6G systems are expected to have 50 times higher simultaneous radio connectivity than 5G radio systems. URLLC, a key feature of 5G, will become a more dominant technology in 6G communications by providing end-to-end delay of less than 1 ms. In 6G systems, volumetric spectral efficiency will be much better, as opposed to the area spectral efficiency often used today. 6G systems will be able to offer very long battery life and advanced battery technologies for energy harvesting, so mobile devices will not need to be recharged separately in 6G systems. In 6G, new network characteristics may be as follows.

- Satellites integrated network: To provide a global mobile population, 6G is expected to be integrated with satellite. The integration of terrestrial, satellite, and airborne networks into a single wireless communication system is important for 6G.

- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).

- Seamless integration wireless information and energy transfer: 6G wireless networks will deliver power to charge batteries of devices such as smartphones and sensors. Therefore, wireless information and energy transfer (WIET) will be integrated.

- Ubiquitous super 3D connectivity: Super 3D connection will be generated from 6G ubiquity to access networks and core network functions on drones and very low Earth orbit satellites.

Given the above new network characteristics of 6G, some common requirements may be as follows

- small cell networks: The idea of small cell networks was introduced in cellular systems to improve received signal quality as a result of improved processing throughput, energy efficiency, and spectral efficiency. As a result, small cell networks are an essential characteristic for communication systems over 5G and beyond 5G (5GB). Therefore, 6G communication systems will also adopt the characteristics of small cell networks.
- Ultra-dense heterogeneous network: Ultra-dense heterogeneous networks will be another important characteristic of 6G communication systems. Multi-tier networks composed of heterogeneous networks will improve overall QoS and reduce costs.
- High-capacity backhaul: Backhaul connection is characterized by high-capacity backhaul networks to support large volumes of traffic. High-speed fiber optics and free-space optics (FSO) systems may be a possible solution to this problem.
- Radar technology integrated with mobile technology: High-precision localization (or location-based services) through communication is one of the features of 6G wireless communication systems. Therefore, radar systems will be integrated with 6G networks.
- Softwarization and virtualization: Softwareization and virtualization are two important features that are fundamental to the design process in a 5GB network to ensure flexibility, reconfigurability, and programmability. In addition, billions of devices may be shared on a shared physical infrastructure.

The following describes the core implementation technologies for 6G systems.

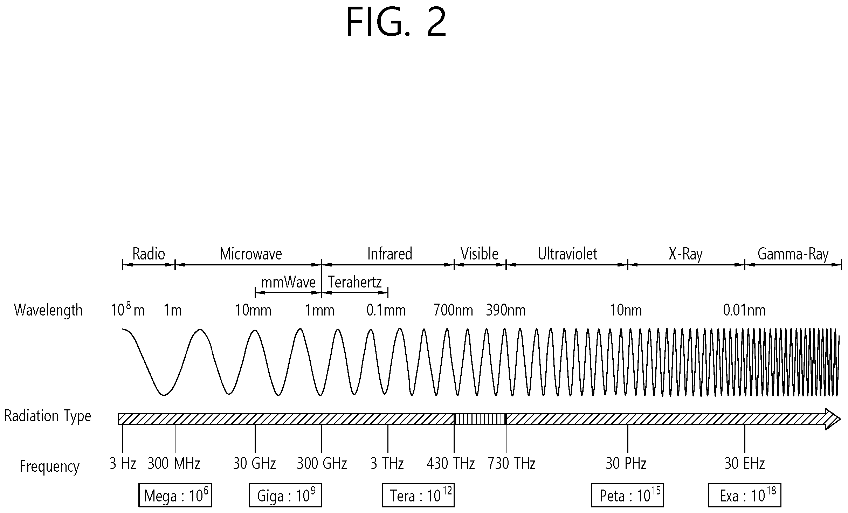

- Artificial Intelligence: The most important and new technology that will be introduced in the 6G system is AI. The 4G system did not involve AI. 5G systems will support partial or very limited AI. However, 6G systems will be fully AI-enabled for automation. Advances in machine learning will create more intelligent networks for real-time communication in 6G. The introduction of AI in telecommunications may streamline and improve real-time data transmission. AI may use numerous analytics to determine the way complex target operations are performed, which means AI can increase efficiency and reduce processing delays. Time-consuming tasks such as handover, network selection, and resource scheduling can be done instantly by using AI. AI may also play an important role in M2M, machine-to-human, and human-to-machine communications. In addition, AI may become a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Bmeaforming
- Optical wireless technology
- FSO Backhaul Network
- Non-Terrestrial Networks, NTN
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse

- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Autonomous Driving, Self-driving: For perfect autonomous driving, vehicles must communicate with each other to inform each other of dangerous situations, or with infrastructure such as parking lots and traffic lights to check information such as the location of parking information and signal change times. Vehicle to Everything (V2X), a key element in building an autonomous driving infrastructure, is a technology that allows vehicles to communicate and share information with various elements on the road, in order to perform autonomous driving, such as vehicle-to-vehicle (V2V) wireless communication and vehicle-to-infrastructure (V2I) wireless communication. In order to maximize the performance of autonomous driving and ensure high safety, fast transmission speeds and low latency technologies are essential. In addition, in the future, autonomous driving will go beyond delivering warnings or guidance messages to a driver to actively intervene in vehicle operation and directly control the vehicle in dangerous situations, so the amount of information that needs to be transmitted and received will be vast, and 6G is expected to maximize autonomous driving with faster transmission speeds and lower latency than 5G.

For the sake of clarity, the description focuses on 5G NR, but the technical ideas of one embodiment of the present disclosure are not limited thereto. Various embodiments of the present disclosure may also be applicable to 6G communication systems.

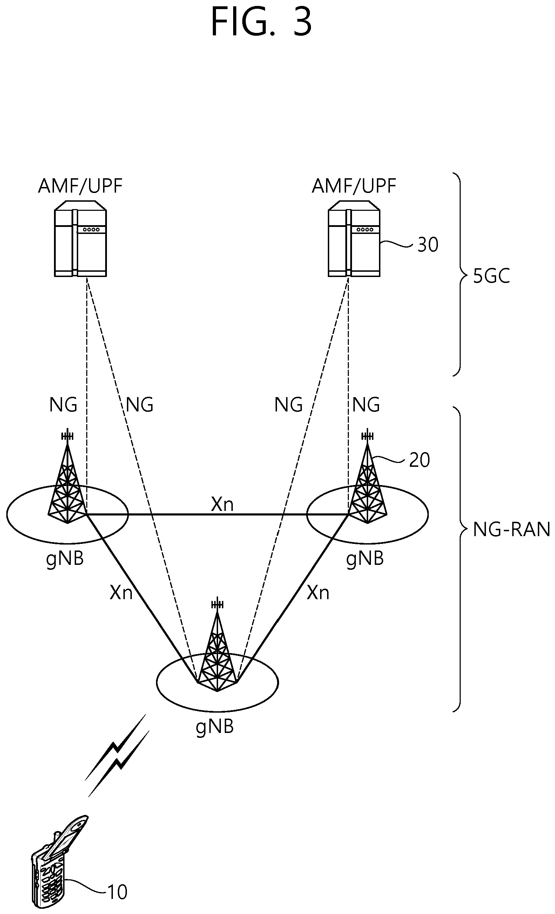

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

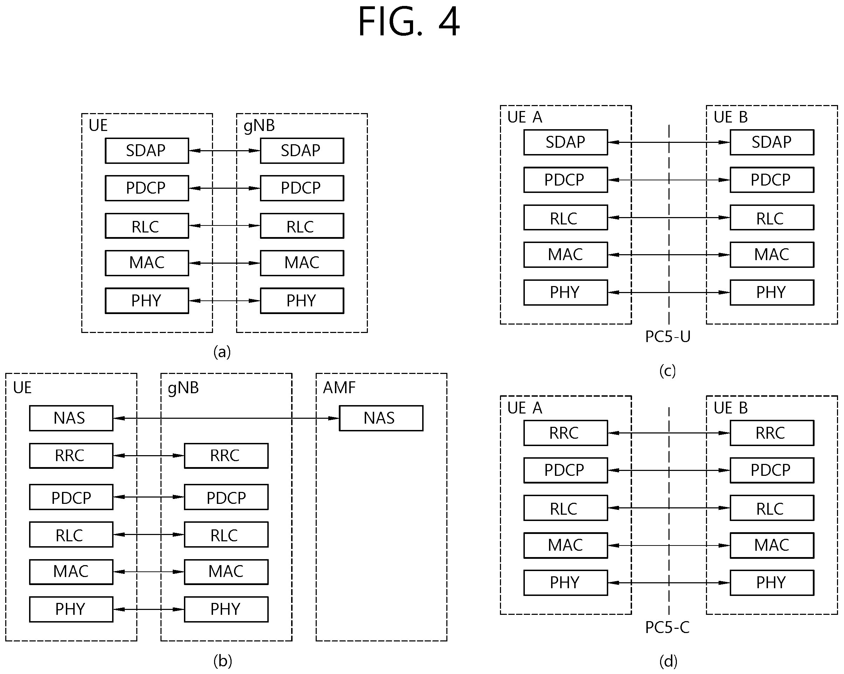

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC _INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

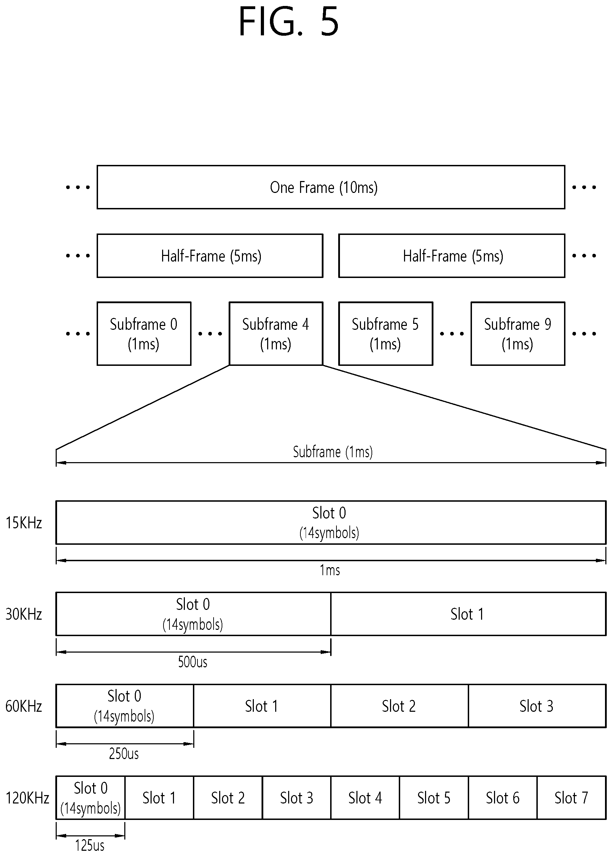

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot ($N^{slot}_{symb}$), number of slots per frame ($N^{frame,u}_{slot}$), and number of slots per subframe ($N^{subframe,u}_{slot}$), depending on the SCS configuration (u), when Normal CP or Extended CP is used.

[Table 2]

| CP type | SCS (15*2^u) | $N^{slot}_{symb}$ | $N^{frame,u}_{slot}$ | $N^{subframe,u}_{slot}$ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

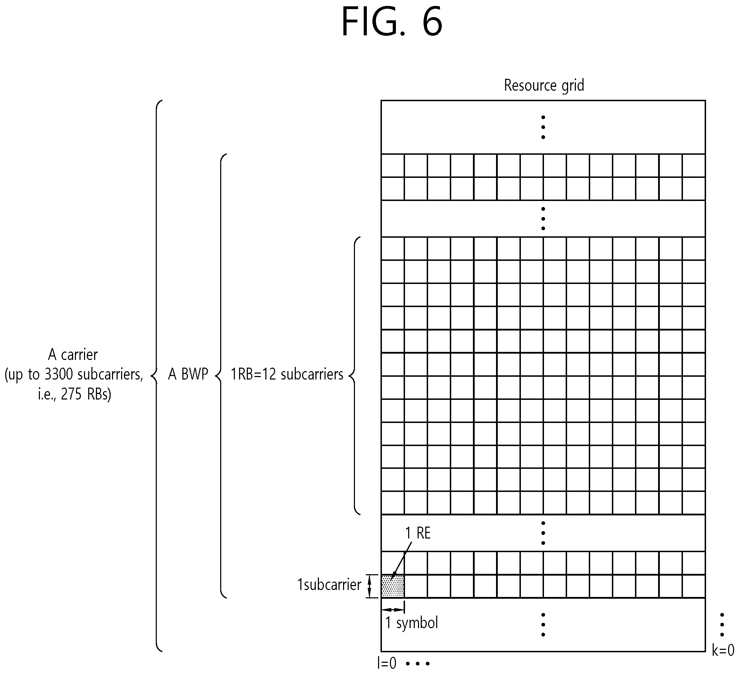

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on).

A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

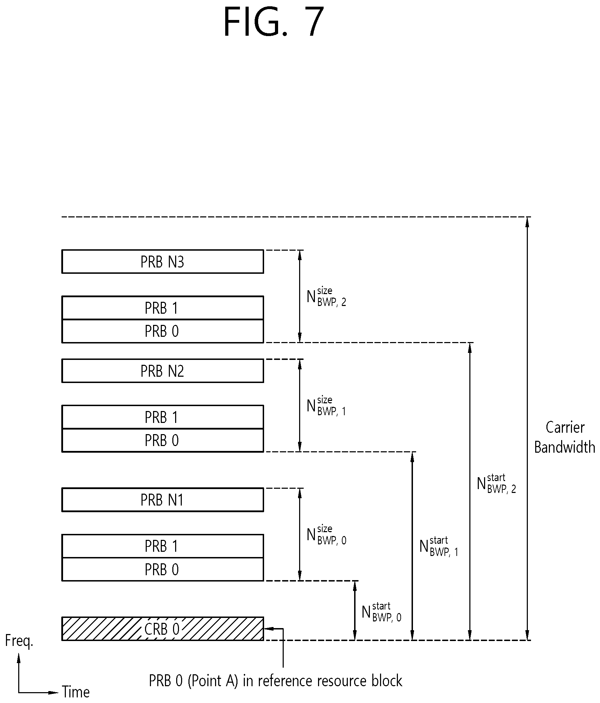

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

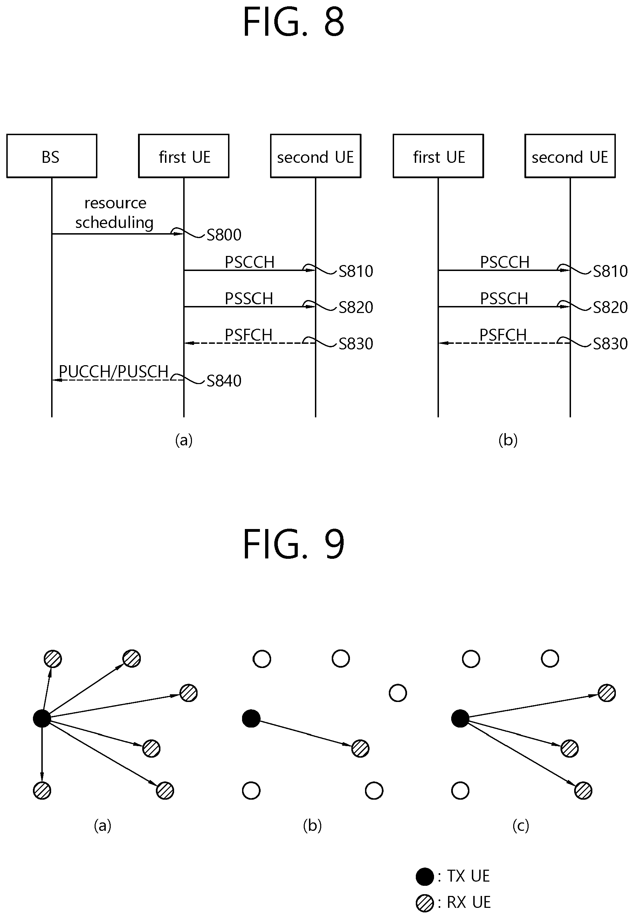

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1 st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Hereinafter, a UE procedure for determining a subset of resources to be reported to a higher layer in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources $(r_0, r_1, r_2, ...)$ which may be subject to re-evaluation and a set of resources $(r'_0, r'_1, r'_2, ...)$ which may be subject to pre-emption.
- it is up to UE implementation to determine the subset of resources as requested by higher layers before or after the slot $r_i''$ - $T_3$ , where $r_i''$ is the slot with the smallest slot index among $(r_0, r_1, r_2, ...)$ and $(r_0', r_1', r_2', ...)$ , and $T_3$ is equal to $T_{proc,1}^{SL}$ , where $T_{proc,1}^{SL}$ is defined in slots, and where $\mu_{SL}$ is the SCS configuration of the SL BWP.

The following higher layer parameters affect this procedure:

sl-SelectionWindowList: internal parameter $T_{2min}$ is set to the corresponding value from higher layer parameter sl-SelectionWindowList for the given value of $prio_{TX}$.

- sl-Thres-RSRP-List: this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $p_j = prio_{TX}$.
- sl-RS-ForSensing selects if the UE uses the PSSCH-RSRP or PSCCH-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter $X$ for a given $prio_{TX}$ is defined as sl-TxPercentageList $(prio_{TX})$ converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P_{rsvp\_TX}'$ .

Notation:

$(t_0'^{SL}, t_1'^{SL}, t_2'^{SL}, ...)$ may denote the set of slots which belongs to the sidelink resource pool.

For example, a UE may select a set of candidate resources (Sa) based on Table 5. For example, when resource (re)selection is triggered, a UE may select a candidate resource set (Sa) based on Table 5. For example, when re-evaluation or pre-emption is triggered, a UE may select a candidate resource set (Sa) based on Table 5.

[Table 5]

The following steps are used:

1) A candidate single-slot resource for transmission $R_{x,y}$ is defined as a set of $L_{subCH}$ contiguous sub-channels with sub-channel $x+j$ in slot $t_y'^{SL}$ where $j = 0,..., L_{subCH}$ - 1. The UE shall assume that any set of $L_{subCH}$ contiguous sub-channels included in the corresponding resource pool within the time interval [n + $T_1$, n + $T_2$] correspond to one candidate single-slot resource, where

- selection of $T_1$ is up to UE implementation under $0 \leq T_1 \leq T_{proc,1}^{SL}$ , where $T_{proc,1}^{SL}$ is defined in slots in Table 8.1.4-2 where $\mu_{SL}$ is the SCS configuration of the SL BWP;

- if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).

The total number of candidate single-slot resources is denoted by $M_{total}$.

2) The sensing window is defined by the range of slots $[n - T_0, n - T_{proc,0}^{SL})$ where $T_0$ is defined above and $T_{proc,0}^{SL}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.

3) The internal parameter $Th(p_i, p_j)$ is set to the corresponding value of RSRP threshold indicated by the i-th field in sl-Thres-RSRP-List, where $i = p_i + (p_j - 1) * 8$.

4) The set $S_A$ is initialized to the set of all the candidate single-slot resources.

5) The UE shall exclude any candidate single-slot resource $R_{x,y}$ from the set $S_A$ if it meets all the following conditions:

(continued)

- the UE has not monitored slot $t'^{SL}_m$ in Step 2.

- for any periodicity value allowed by the higher layer parameter *sl-ResourceReservePeriodList* and a hypothetical SCI format 1-A received in slot $t'^{SL}_m$ with *'Resource reservation period'* field set to that periodicity value and indicating all subchannels of the resource pool in this slot, condition c in step 6 would be met. 5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot $t'^{SL}_m$, and *'Resource reservation period'* field, if present, and *'Priority'* field in the received SCI format 1-A indicate the values $P_{rsvp\_RX}$ and $prio_{RX}$, respectively according to Clause 16.4 in [6, TS 38.213],

b) the RSRP measurement performed, according to clause 8.4.2.1 for the received SCI format 1-A, is higher than $Th(prio_{RX}, prio_{TX})$;

c) the SCI format received in slot $t'^{SL}_m$ or the same SCI format which, if and only if the *'Resource reservation period'* field is present in the received SCI format 1-A, is assumed to be received in slot(s) $t'^{SL}_{m+q \times P'_{rsvp\_RX}}$ determines according to clause 8.1.5 the set of resource blocks and slots which overlaps with $R_{x,y+j \times P'_{rsvp\_TX}}$ for $q$=1, 2, ..., $Q$ and $j$=0, 1, ..., $C_{resel}$ - 1. Here, $P'_{rsvp\_RX}$ is $P_{rsvp\_RX}$ converted to units of logical slots according to clause 8.1.7,

$Q = \left\lceil \frac{T_{scal}}{P'_{rsvp\_RX}} \right\rceil$ if $P_{rsvp\_RX} < T_{scal}$ and $n' - m \le P'_{rsvp\_RX}$, where $t'^{SL}_{n'} = n$ if slot $n$ belongs to the set

$\left( t'^{SL}_0, t'^{SL}_1, \dots, t'^{SL}_{T'_{max}-1} \right)$, otherwise slot $t'^{SL}_{n'}$ is the first slot after slot n belonging to the set

$\left( t'^{SL}_0, t'^{SL}_1, \dots, t'^{SL}_{T'_{max}-1} \right)$; otherwise Q = 1. $T_{scal}$ is set to selection window size $T_2$ converted to units of msec.

7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4. The UE shall report set $S_A$ to higher layers.

If a resource $r_i$ from the set $(r_0, r_1, r_2, ...)$ is not a member of $S_A$, then the UE shall report re-evaluation of the resource $r_i$ to higher layers.

If a resource $r'_i$ from the set $(r'_0, r'_1, r'_2, ...)$ meets the conditions below then the UE shall report pre-emption of the resource $r'_i$ to higher layers

- $r'_i$ is not a member of $S_A$, and

- $r'_i$ meets the conditions for exclusion in step 6, with $Th(prio_{RX}, prio_{TX})$ set to the final threshold after executing steps 1)-7), i.e. including all necessary increments for reaching $X \cdot M_{total}$, and

- the associated priority $prio_{RX}$, satisfies one of the following conditions:

- *sl-PreemptionEnable* is provided and is equal to 'enabled' and $prio_{TX} > prio_{RX}$

- *sl-PreemptionEnable* is provided and is not equal to 'enabled', and $prio_{RX} < prio_{pre}$ and $prio_{TX} > prio_{RX}$

Meanwhile, partial sensing may be supported for power saving of the UE. For example, in LTE SL or LTE V2X, the UE may perform partial sensing based on Tables 6 and 7.

[Table 6]

In sidelink transmission mode 4, when requested by higher layers in subframe n for a carrier, the UE shall determine the set of resources to be reported to higher layers for PSSCH transmission according to the steps described in this Subclause. Parameters $L_{subCH}$ the number of sub-channels to be used for the PSSCH transmission in a subframe, $P_{rsvp\_TX}$ the resource reservation interval, and $prio_{TX}$ the priority to be transmitted in the associated SCI format 1 by the UE are all provided by higher layers.

(continued)

In sidelink transmission mode 3, when requested by higher layers in subframe n for a carrier, the UE shall determine the set of resources to be reported to higher layers in sensing measurement according to the steps described in this Subclause. Parameters $L_{subCH}$, $P_{rsvp\_TX}$ and $prio_{TX}$ are all provided by higher layers. $C_{resel}$ is determined by $C_{resel}$=10*SL_RESOURCE_RESELECTION_COUNTER, where SL_RESOURCE_RESELECTION_COUNTER is provided by higher layers.

...

If partial sensing is configured by higher layers then the following steps are used:

1) A candidate single-subframe resource for PSSCH transmission $R_{x,y}$ is defined as a set of $L_{subCH}$ contiguous sub-channels with sub-channel x+j in subframe $t_y^{SL}$ where $j = 0, ... , L_{subCH}$ - 1. The UE shall determine by its implementation a set of subframes which consists of at least Y subframes within the time interval [$n + T_1$, $n + T_2$] where selections of $T_1$ and $T_2$ are up to UE implementations under $T_1 \leq 4$ and $T_{2min}(prio_{TX}) \leq T_2 \leq 100$, if $T_{2min}$ ($Prio_{TX}$) is provided by higher layers for $prio_{TX}$, otherwise $20 \leq T_2 \leq 100$. UE selection of $T_2$ shall fulfil the latency requirement and Y shall be greater than or equal to the high layer parameter *minNumCandidateSF*. The UE shall assume that any set of $L_{subCH}$ contiguous sub-channels included in the corresponding PSSCH resource pool within the determined set of subframes correspond to one candidate single-subframe resource. The total number of the candidate single-subframe resources is denoted by $M_{total}$.

2) If a subframe $t_y^{SL}$ is included in the set of subframes in Step 1, the UE shall monitor any subframe $t_{y-k \times P_{step}}^{SL}$ if k-th bit of the high layer parameter *gapCandidateSensing* is set to 1. The UE shall perform the behaviour in the following steps based on PSCCH decoded and S-RSSI measured in these subframes.

3) The parameter $Th_{a,b}$ is set to the value indicated by the i-th *SL-ThresPSSCH-RSRP* field in *SL-ThresPSSCH-RSRP-List* where i = (*a* - 1) * 8 + *b*.

4) The set $S_A$ is initialized to the union of all the candidate single-subframe resources. The set $S_B$ is initialized to an empty set.

5) The UE shall exclude any candidate single-subframe resource $R_{x,y}$ from the set $S_A$ if it meets all the following conditions:

- the UE receives an SCI format 1 in subframe $t_m^{SL}$, and "Resource reservation" field and "Priority" field in the received SCI format 1 indicate the values $P_{rsvp\_RX}$ and $prio_{RX}$, respectively.

- PSSCH-RSRP measurement according to the received SCI format 1 is higher than $Th_{prioTX, prioRX}$.

- the SCI format received in subframe $t_m^{SL}$ or the same SCI format 1 which is assumed to be received in subframe(s) $t_{m+q \times P_{step} \times P_{rsvp_{RX}}}^{SL}$ determines according to 14.1.1.4C the set of resource blocks and subframes which overlaps with $R_{x,y+j \times P'_{rsvp\_TX}}$ for q=1, 2, ..., Q and j=0, 1, ..., $C_{resel}$ - 1. Here, $Q = \frac{1}{P_{rsvp\_RX}}$ if $P_{rsvp}$_RX and y' - m $\leq$ $P_{step} \times P_{rsvp\_RX} + P_{step}$, where $t_{y'}^{SL}$ is the last subframe of the Y subframes , and Q = 1 otherwise.

6) If the number of candidate single-subframe resources remaining in the set $S_A$ is smaller than $0.2 \cdot M_{total}$, then Step 4 is repeated with $Th_{a,b}$ increased by 3 dB.

[Table 7]

7) For a candidate single-subframe resource $R_{x,y}$ remaining in the set $S_A$, the metric $E_{x,y}$ is defined as the linear average of S-RSSI measured in sub-channels x+k for k = 0, ..., $L_{subCH}$ - 1 in the monitored subframes in Step 2 that can be expressed by $t_{y-P_{step}*j}^{SL}$ for a non-negative integer *j*.

8) The UE moves the candidate single-subframe resource $R_{x,y}$ with the smallest metric $E_{x,y}$ from the set $S_A$ to $S_B$. This step is repeated until the number of candidate single-subframe resources in the set $S_B$ becomes greater than or equal to $0.2 \cdot M_{total}$.

9) When the UE is configured by upper layers to transmit using resource pools on multiple carriers, it shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time. The UE shall report set $S_B$ to higher layers. If transmission based on random selection is configured by upper layers and when the UE is configured by upper layers to transmit using resource pools on multiple carriers, the following steps are used:

(continued)

> 1) A candidate single-subframe resource for PSSCH transmission $R_{x,y}$ is defined as a set of $L_{subCH}$ contiguous sub-channels with sub-channel $x+j$ in subframe $t_y^{SL}$ where $j = 0, ... , L_{subCH}$ - 1. The UE shall assume that any set of $L_{subCH}$ contiguous sub-channels included in the corresponding PSSCH resource pool within the time interval [n + $T_1$, n + $T_2$] corresponds to one candidate single-subframe resource, where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement. The total number of the candidate single-subframe resources is denoted by $M_{total}$.
>
> 2) The set $S_A$ is initialized to the union of all the candidate single-subframe resources. The set $S_B$ is initialized to an empty set.
>
> 3) The UE moves the candidate single-subframe resource $R_{x,y}$ from the set $S_A$ to $S_B$.
>
> 4) The UE shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.
>
> The UE shall report set $S_B$ to higher layers.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits as defined in Table 8
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 8]

| Value of 2nd-stage SCI format field | 2nd-stage SCI format |
| --- | --- |
| 00 | SCI format 2-A |
| 01 | SCI format 2-B |
| 10 | Reserved |

(continued)

| Value of 2nd-stage SCI format field | 2nd-stage SCI format |
|---|---|
| 11 | Reserved |

[Table 9]

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 10
- CSI request - 1 bit

[Table 10]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

FIG. 9 shows three cast types, in accordance with an embodiment of the present disclosure. The embodiment of FIG. 9 may be combined with various embodiments of the present disclosure. Specifically, FIG. 9(a) shows broadcast-type SL communication, FIG. 9(b) shows unicast type-SL communication, and FIG. 9(c) shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Meanwhile, in the conventional unlicensed spectrum (NR-U), a communication method between a UE and a base station is supported in an unlicensed band. In addition, a mechanism for supporting communication in an unlicensed band between sidelink UEs is planned to be supported in Rel-18.

In the present disclosure, a channel may refer to a set of frequency domain resources in which Listen-Before-Talk (LBT) is performed. In NR-U, the channel may refer to an LBT bandwidth with 20 MHz and may have the same meaning as an RB set. For example, the RB set may be defined in section 7 of 3GPP TS 38.214 V17.0.0.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Hereinafter, a wireless communication system supporting an unlicensed band/shared spectrum will be described.

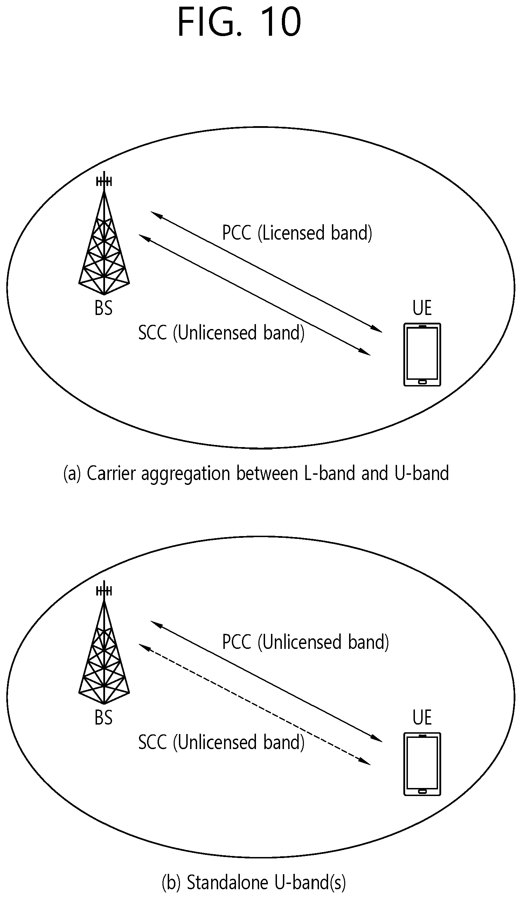

FIG. 10 shows an example of a wireless communication system supporting an unlicensed band, based on an embodiment of the present disclosure. For example, FIG. 10 may include an unlicensed spectrum (NR-U) wireless communication system. The embodiment of FIG. 10 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 10, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 10. In other words, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 10, the base station may be replaced with the UE. In this case, for example, PSCCH transmission, PSSCH transmission, PSFCH transmission, S-SSB transmission, etc. may be supported on a UCell.

Unless otherwise noted, the definitions below are applicable to the following terminologies used in the present disclosure.

- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of $T_{sl}$ = 9 us. The base station or the UE senses a channel during a sensing slot duration. If power detected for at least 4 us within the sensing slot duration is less than an energy detection threshold $X_{thresh}$, the sensing slot duration $T_{sl}$ is considered to be idle. Otherwise, the sensing slot duration $T_{sl}$ = 9 us is considered to be busy. CAP may also be referred to as listen before talk (LBT). For example, a channel access procedure (CAP) may include an LBT, and channel sensing may be performed to monitor the power of that channel during a specific time interval (channel sensing interval) for the CAP.
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.

- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.

- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

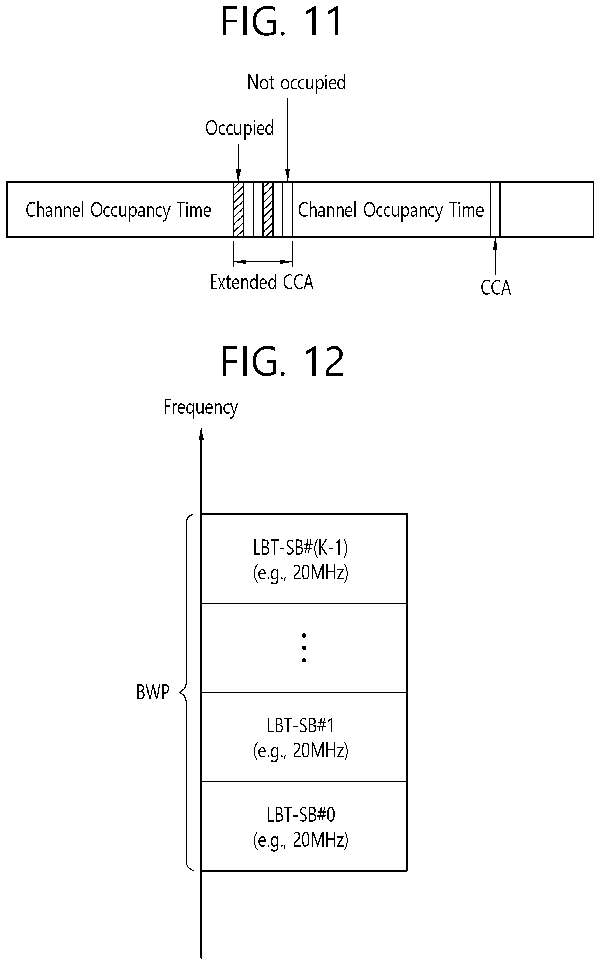

FIG. 11 shows a method of occupying resources in an unlicensed band, based on an embodiment of the present disclosure. The embodiment of FIG. 11 may be combined with various embodiments of the present disclosure.

Referring to FIG. 11, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is the that clear channel assessment (CCA) is confirmed. If a CCA threshold (e.g., $X_{Thresh}$) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT. For example, a channel access procedure (CAP) may include an LBT, and channel sensing may be performed to monitor the power of that channel during a specific time interval (channel sensing interval) for the CAP.

Table 11 shows an example of the channel access procedure (CAP) supported in NR-U.

[Table 11]

| | Type | Explanation |
|---|---|---|
| DL | Type 1 CAP | CAP with random back-off<br>- time duration spanned by the sensing slots that are sensed to be idle before a downlink transmission(s) is random |
| | Type 2 CAP - Type 2A, 2B, 2C | CAP without random back-off<br>- time duration spanned by sensing slots that are sensed to be idle before a downlink transmission(s) is deterministic |
| UL or SL | Type 1 CAP | CAP with random back-off<br>- time duration spanned by the sensing slots that are sensed to be idle before an uplink or sidelink transmission(s) is random |
| | Type 2 CAP - Type 2A, 2B, 2C | CAP without random back-off<br>- time duration spanned by sensing slots that are sensed to be idle before an uplink or sidelink transmission(s) is deterministic |

Referring to Table 11, the LBT type or CAP for DL/UL/SL transmission may be defined. However, Table 11 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 12 shows a case in which a plurality of LBT-SBs are included in an unlicensed band, based on an embodiment of the present disclosure. The embodiment of FIG. 12 may be combined with various embodiments of the present disclosure.

Referring to FIG. 12, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB #(K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:

- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 12 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

[Table 12]

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

(1) Type 1 downlink (DL) CAP Method

In the type 1 DL CAP, the length of a time duration spanned by sensing slots sensed to be idle before transmission(s) may be random. The type 1 DL CAP may be applied to the following transmissions:

- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

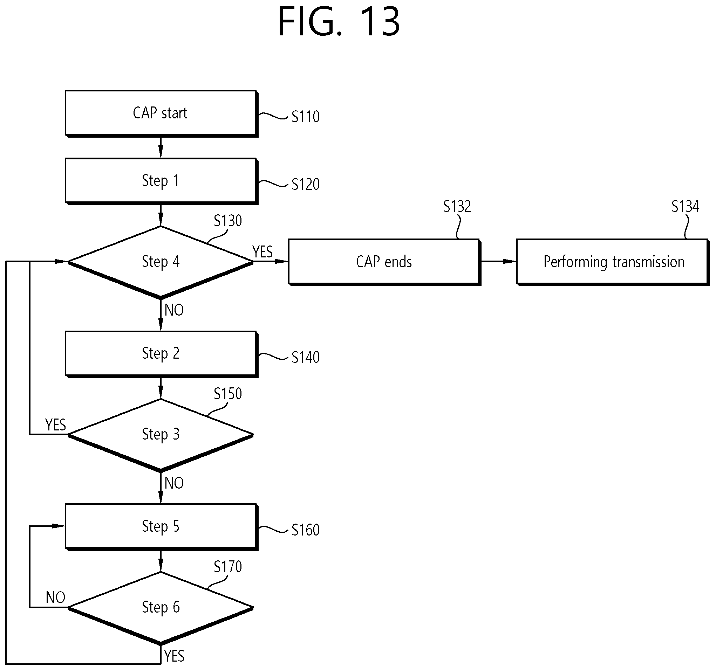

FIG. 13 shows CAP operations performed by a base station to transmit a downlink signal through an unlicensed band, based on an embodiment of the present disclosure. The embodiment of FIG. 13 may be combined with various embodiments of the present disclosure.

Referring to FIG. 13, the base station may sense whether a channel is idle for sensing slot durations of a defer duration Ta. Then, if a counter N is zero, the base station may perform transmission (S134). In this case, the base station may adjust the counter N by sensing the channel for additional sensing slot duration(s) according to the following steps:

Step 1) (S120) The base station sets N to $N_{init}$ (N= $N_{init}$), where $N_{init}$ is a random number uniformly distributed between

0 and $CW_p$. Then, step 4 proceeds.

Step 2) (S140) If N>0 and the base station determines to decrease the counter, the base station sets N to N-1 (N=N-1).

Step 3) (S150) The base station senses the channel for the additional sensing slot duration. If the additional sensing slot duration is idle (Y), step 4 proceeds. Otherwise (N), step 5 proceeds.

Step 4) (S130) If N=0 (Y), the base station terminates the CAP (S132). Otherwise (N), step 2 proceeds.

Step 5) (S160) The base station senses the channel until either a busy sensing slot is detected within an additional defer duration $T_d$ or all the slots of the additional defer duration $T_d$ are detected to be idle.

Step 6) (S170) If the channel is sensed to be idle for all the slot durations of the additional defer duration $T_d$ (Y), step 4 proceeds. Otherwise (N), step 5 proceeds.

Table 13 shows that $m_p$, a minimum contention window (CW), a maximum CW, a maximum channel occupancy time (MCOT), and an allowed CW size, which are applied to the CAP, vary depending on channel access priority classes.

[Table 13]

| Channel Access Priority Class (p) | mp | $CW_{min,p}$ | $CW_{max,p}$ | $T_{mcot,p}$ | allowed $CW_p$ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 13, a contention window size (CWS), a maximum COT value, etc. for each CAPC may be defined. For example, $T_d$ may be equal to $T_f + m_p * T_{sl}$ (Ta = $T_f + m_p * T_{sl}$).

The defer duration $T_d$ is configured in the following order: duration $T_f$ (16 us) + $m_p$ consecutive sensing slot durations $T_{sl}$ (9 us). $T_f$ includes the sensing slot duration $T_{sl}$ at the beginning of the 16 us duration.

The following relationship is satisfied: $CW_{min,p} <= CW_p <= CW_{max,p}$. $CW_p$ may be configured by $CW_p = CW_{min,p}$ and updated before step 1 based on HARQ-ACK feedback (e.g., the ratio of ACK or NACK) for a previous DL burst (e.g., PDSCH) (CW size update). For example, $CW_p$ may be initialized to $CW_{min,p}$ based on the HARQ-ACK feedback for the previous DL burst. Alternatively, $CW_p$ may be increased to the next higher allowed value or maintained as it is.

(2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration $T_{short\_dl}$ = 25 us. Herein, $T_{short\_dl}$ includes the duration $T_f$ (=16 us) and one sensing slot duration immediately after the duration $T_f$, where the duration $T_f$ includes a sensing slot at the beginning thereof.

- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for $T_f$ = 16 us. $T_f$ includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

(1) Type 1 uplink (UL) CAP Method

In the type 1 UL CAP, the length of a time duration spanned by sensing slots sensed to be idle before transmission(s) is random. The type 1 UL CAP may be applied to the following transmissions.

- PUSCH/SRS transmission(s) scheduled and/or configured by the base station
- PUCCH transmission(s) scheduled and/or configured by the base station
- Transmission(s) related to a random access procedure (RAP)

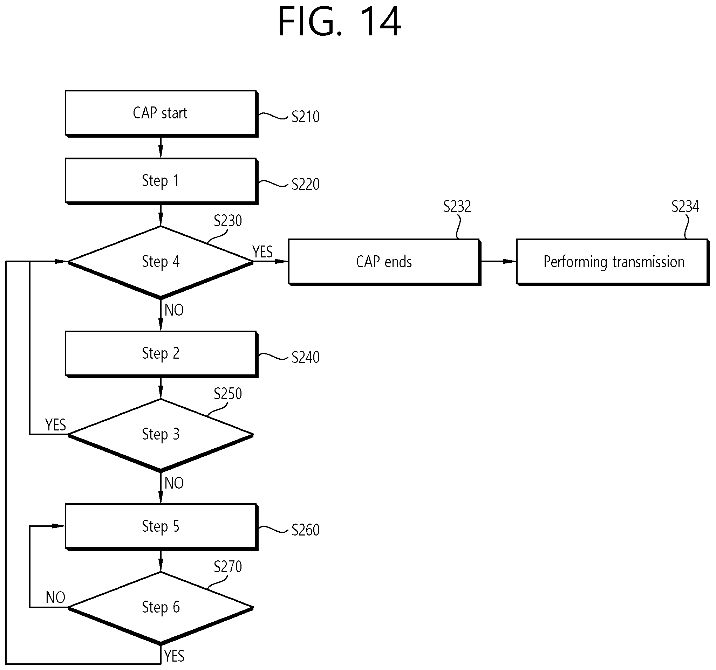

FIG. 14 shows type 1 CAP operations performed by a UE to transmit an uplink signal, based on an embodiment of the present disclosure. The embodiment of FIG. 14 may be combined with various embodiments of the present disclosure.

Referring to FIG. 14, the UE may sense whether a channel is idle for sensing slot durations of a defer duration $T_d$. Then, if a counter N is zero, the UE may perform transmission (S234). In this case, the UE may adjust the counter N by sensing the channel for additional sensing slot duration(s) according to the following steps:

Step 1) (S220) The UE sets N to $N_{init}$ (N = $N_{init}$), where $N_{init}$ is a random number uniformly distributed between 0 and $CW_p$. Then, step 4 proceeds.

Step 2) (S240) If N>0 and the UE determines to decrease the counter, the UE sets N to N-1 (N = N-1).

Step 3) (S250) The UE senses the channel for the additional sensing slot duration. If the additional sensing slot duration is idle (Y), step 4 proceeds. Otherwise (N), step 5 proceeds.

Step 4) (S230) If N=0 (Y), the UE terminates the CAP (S232). Otherwise (N), step 2 proceeds.

Step 5) (S260) The UE senses the channel until either a busy sensing slot is detected within an additional defer duration $T_d$ or all the slots of the additional defer duration $T_d$ are detected to be idle.

Step 6) (S270) If the channel is sensed to be idle for all the slot durations of the additional defer duration $T_d$ (Y), step 4 proceeds. Otherwise (N), step 5 proceeds.

Table 14 shows that $m_p$, a minimum CW, a maximum CW, a maximum channel occupancy time (MCOT), and an allowed CW size, which are applied to the CAP, vary depending on channel access priority classes.

[Table 14]

| Channel Access Priority Class (p) | mp | $CW_{min,p}$ | $CW_{max,p}$ | $T_{ulmcot,p}$ | allowed $CW_p$ sizes |
|---|---|---|---|---|---|
| 1 | 2 | 3 | 7 | 2ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 14, a contention window size (CWS), a maximum COT value, etc. for each CAPC may be defined. For example, $T_d$ may be equal to $T_f + m_p * T_{sl}$ (Ta = $T_f + m_p * T_{sl}$).

The defer duration $T_d$ is configured in the following order: duration $T_f$(16 us) + $m_p$ consecutive sensing slot durations $T_{sl}$ (9 us). $T_f$ includes the sensing slot duration $T_{sl}$ at the beginning of the 16 us duration.

The following relationship is satisfied: $CW_{min,p}$ <= $CW_p$ <= $CW_{max,p}$. $CW_p$ may be configured by $CW_p = CW_{min,p}$ and updated before step 1 based on an explicit/implicit reception response for a previous UL burst (e.g., PUSCH) (CW size update). For example, $CW_p$ may be initialized to $CW_{min,p}$ based on the explicit/implicit reception response for the previous UL burst. Alternatively, $CW_p$ may be increased to the next higher allowed value or maintained as it is.

(2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration $T_{short\_dl}$ = 25 us. Herein, $T_{short\_dl}$ includes the duration $T_f$ (=16 us) and one sensing slot duration immediately after the duration $T_f$. In the type 2A UL CAP, $T_f$ includes a sensing slot at the beginning thereof. In the type 2B UL CAP, the UE may perform transmission immediately after the channel is sensed to be idle for the sensing duration $T_f$ = 16 us. In the type 2B UL CAP, $T_f$ includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CACP (e.g., minimum contention window size, maximum contention window size, $m_p$, etc.). For example, the UE may select a backoff counter (BC) after selecting a random value between the minimum CW and the maximum CW mapped to the CAPC. In this case, for example, the BC may be a positive integer less than or equal to the random value. The UE sensing a channel decreases the BC by 1 if the channel is idle. If the BC becomes zero and the UE detects that the channel is idle for the time $T_d$ ($T_d = T_f + m_p * T_{sl}$), the UE may attempt to transmit data by occupying the channel. For example, $T_{sl}$ ($= 9$ usec) is a basic sensing unit or sensing slots, and may include a measurement duration for at least 4 usec. For example, the front 9 usec of $T_f$ ($= 16$ usec) may be configured to be $T_{sl}$.

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 25 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). That is, the operation in which the UE checks whether the channel is idle or busy may be referred to as Clear Channel Assessment (CCA), and the UE may check whether the channel is idle or busy for the CCA duration.

The following describes a UE procedure to report HARQ-ACK on a sidelink.

A UE may be instructed by SCI format that schedules a reception of PSSCH on one or more subchannels from $N^{PSSCH}_{subch}$ to transmit a PSFCH that includes HARQ-ACK information in response to the reception of a PSSCH. A UE provides HARQ-ACK information including ACK or NACK, or NACK only.

A UE may be provided with the number of slots in a resource pool for PSFCH transmission occasion resources by sl-PSFCH-Period-r16. If the number is zero, PSFCH transmission from a UE is disabled in the resource pool. A UE expects to have a PSFCH transmission occasion resource in slot $t'^{SL}_k$ ($0 \leq k < T'_{max}$) if $k \bmod N^{PSFCH}_{PSSCH} = 0$, where $t'^{SL}_k$ is a slot in the resource pool, and $T'_{max}$ is the number of slots in the resource pool within 10240 msec, and $N^{PSFCH}_{PSSCH}$ is provided in sl-PSFCH-Period-r16. A UE may be instructed by the upper layer not to transmit a PSFCH in response to the reception of a PSSCH. If a UE receives a PSSCH in the resource pool and the HARQ feedback enabled/disabled indicator field included in the associated SCI format 2-A or SCI format 2-B has a value of 1, the UE provides HARQ-ACK information via PSFCH transmission from in resource pool. A UE transmits the PSFCH in a first slot, wherein the first slot is the slot including a PSFCH resource and after the minimum number of slots provided by sl-MinTimeGapPSFCH-r16 of the resource pool after the last slot of the PSSCH reception.

A UE is provided by sl-PSFCH-RB-Set-r16 with $M^{PSFCH}_{PRB,set}$ of PRBs in a resource pool for PSFCH transmissions on PRBs in the resource pool. For the number of PSSCH slots related to a PSFCH slot that is less than or equal to $N_{subch}$ and $N^{PSFCH}_{PSSCH}$, the number of subchannels for the resource pool provided by sl-NumSubchannel, a UE allocates the PRB $[(i+j-N^{PSFCH}_{PSSCH})-M^{PSFCH}_{subch,slot}, (i+1+j-N^{PSFCH}_{PSSCH})-M^{PSFCH}_{subch,slot}-1]$ among the $M^{PSFCH}_{PRB, set}$ PRB for slot i and subchannel j among the PSSCH slots associated with the PSFCH slot. Here, $M^{PSFCH}_{subch,slot} = M^{PSFCH}_{PRB,set} / (N_{subch}-N^{PSFCH}_{PSSCH})$, $0 \leq i < N^{PSFCH}_{PSSCH}$, $0 \leq j < N_{subch}$, and the allocations starts in ascending order for i and continues in ascending order for j. A UE expects $M^{PSFCH}_{PRB,set}$ to be a multiple of $N_{subch} \cdot N^{PSFCH}_{PSSCH}$.

A UE determines the number of available PSFCH resources for multiplexing HARQ-ACK information included in a PSFCH transmission as $R^{PSFCH}_{PRB,CS} = N^{PSFCH}_{type} \cdot M^{PSFCH}_{subch,slot} \cdot N^{PSFCH}_{CS}$. Here, $N^{PSFCH}_{CS}$ may be the number of cyclic shift pairs for the resource pool, and based on an indication by the higher layer,

- $N^{PSFCH}_{type} = 1$, and $M^{PSFCH}_{subch,slot}$ PRB may be related to the starting subchannel of the corresponding PSSCH,

- $N^{PSFCH}_{type} = N^{PSSCH}_{subch}$ and $N^{PSSCH}_{subch} \cdot M^{PSFCH}_{subch,slot}$ PRB is related to one or more subchannels among $N^{PSSCH}_{subch}$ subchannels of the corresponding PSSCH.

A PSFCH resource is indexed first in ascending order of a PRB indexes among $N^{PSFCH}_{type} \cdot M^{PSFCH}_{subch,slot}$ PRBs, after then, it is indexed in ascending order of cyclic shift pair indexes among $N^{PSFCH}_{CS}$ cyclic shift pairs.

A UE determines an index of a PSFCH resource for a PSFCH transmission in response to the PSSCH reception as $(P_{ID} + M_{ID}) \bmod R^{PSFCH}_{PRB,CS}$. Here, $P_{ID}$ is a physical layer source ID provided by SCI format 2-A or 2-B scheduling a PSSCH reception, $M_{ID}$ is an ID of a UE receiving a PSSCH, indicated from the higher layer when a UE detects SCI format 2-A in which a cast type indicator field value is "01", $M_{ID}$ is 0 otherwise.

A UE determines $m_0$ value for calculating a cyclic shift $\alpha$ value from $N^{PSFCH}_{CS}$ and a cyclic shift pair index which corresponds to a PSFCH resource index using Table 15.

[Table 15]

| $N^{PSFCH}_{CS}$ | $m_0$ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

As shown in Table 16, when a UE detects SCI format 2-A with a cast type indicator field value of "01" or "10", or as shown in Table 17, when a UE detects SCI format 2-B or SCI format 2-A with a cast type indicator field value of "11", a UE determines $m_{cs}$ the value for calculating a cyclic shift $\alpha$ value. A UE applies one cyclic shift among cyclic shifts to a sequence used in a PSFCH transmission.

[Table 16]

| HARQ-ACK Value | 0 (NACK) | 1 (ACK) |
|---|---|---|
| Sequence cyclic shift | 0 | 6 |

[Table 17]

| HARQ-ACK Value | 0 (NACK) | 1 (ACK) |
|---|---|---|
| Sequence cyclic shift | 0 | N/A |

Meanwhile, in a future system, a UE may perform a sidelink transmission and/or reception operation in an unlicensed band. For operations in an unlicensed band, depending on band-specific regulations or requirements, a UE's transmission may be preceded by a channel sensing operation (e.g., energy detection/measurement) for the channel to be used, a UE may perform a transmission in the unlicensed band only if, as a result of the channel sensing, the channel or RB set to be used is determined to be IDLE (e.g., if the measured energy is less than or equal to or greater than a certain threshold value), and, if, according to a result of the channel sensing, the channel or RB set to be used is determined to be BUSY (e.g., if the measured energy is greater than or equal to or greater than a certain threshold value), the UE may cancel all or part of the transmission in the unlicensed band.

Meanwhile, in operation in an unlicensed band, a UE may omit or simplify the channel sensing operation (i.e., make the channel sensing interval relatively small) within a certain time interval after a transmission for a certain time period, or conversely, after a certain time interval after the transmission, the UE may decide whether to transmit or not after performing the usual channel sensing operation.

On the other hand, in a transmission in an unlicensed band, depending on regulations or requirements, the size and/or power spectral density (PSD) of the time interval and/or frequency occupied region of the signal/channel transmitted by the UE may be greater than or equal to a certain level, respectively.

On the other hand, in unlicensed bands, in order to simplify channel sensing, it may be informed through channel occupancy time (COT) interval information that the channel obtained through initial general channel sensing is occupied for a certain period of time, and the length of the COT duration may be configured to have different maximum values depending on the priority of the service or data packet or the channel access priority class (CAPC).

Meanwhile, a sidelink transmission may be transmitted through a plurality of RBs that are spaced apart, according to the standards for an unlicensed band. Meanwhile, for an uplink channel transmission in an unlicensed band, a UE may be provided by a base station with information for a single or plurality of RB sets and a single or plurality of interlaces, and the final transmission resource may be determined as the intersection of the RBs within the provided RB sets and the RBs corresponding to the provided interlaces.

Alternatively, an interlace may be defined in a common RB (CRB) grid. For example, in a CRB grid, within an RB set spaced 10 RBs apart at 15 kHz and 5 RBs apart at 30 kHz, the interlace index of each interlace may be determined based on the RB offset that is based on CRB #0.

On the other hand, since sensing and/or resource (re)selection is performed in units of subchannels in the case of sidelink communication, it may be required that the subchannels are represented in the form of interlace and/or RB sets. In this way, subchannel-based sensing operation and/or resource reservation methods may be reused as much as possible.

On the other hand, when sidelink transmissions and receptions are performed based on 60 kHz SCS, a method may be required to ensure that the size of the bandwidth within the occupied channel is guaranteed to be greater than or equal to a certain ratio (e.g., 80%) to the channel size, according to the occupied channel bandwidth (OCB) requirement.

In various embodiments of the present disclosure, embodiments for 60 kHz SCS may be extended and applied to SCS other than 15 kHz and/or 30 kHz SCS. In various embodiments of the disclosure, the embodiments for 60 kHz SCS may be extended and applied to 15 kHz and/or 30 kHz SCS.

Meanwhile, if the number of allocated PRBs for sidelink transmissions is significantly increased to meet OCB requirements and PSD requirements, frequency domain resources may become scarce, especially for PSFCH resources. On the other hand, if a small number of PRBs are allocated and placed at the ends of the channel to satisfy OCB requirements, the overall transmit power may be limited by PSD requirements.

On the other hand, within the channel occupancy time (COT) interval, the OCB requirement may be temporarily omitted. However, in this case, for example, the occupied channel bandwidth still needs to be greater than and/or equal to 2 MHz.

For example, when transmitting PSCCH/PSSCH, if the PSSCH is a contiguous RB-based transmission (e.g., if the configured subchannel consists of consecutive PRBs), in order to fulfill the OCB requirements, a subchannel in which some of the configured PRBs are located outside the RB set may be used as a transmission resource when transmitting PSCCH/PSSCH. For example, when the specific subchannel is used for PSCCH/PSSCH transmission, a UE may only use PRBs included within the RB set among the PRBs comprising the subchannel. For example, the above scheme may be the case where an RB set that is concatenated with the RB set is not included in the transmission resources. For example, when the specific subchannel is used for PSCCH/PSSCH transmission, a UE may use the minimum number of configured PRBs to meet the OCB requirements as transmission resources. For example, when calculating the TBS for a subchannel that is additionally used, a UE may exclude the resources of the subchannel when calculating the number of PRBs. For example, when calculating the TBS for the additionally used subchannel, a UE may include the resources of the subchannel when calculating the number of PRBs, assuming that the entire configured PRB is used.

For example, when transmitting an SL channel, a discontinuous PRB set may be used as a transmission resource. For example, the PRB spacing within the discontinuous PRB set may be (pre-)configured. For example, for a 60 kHz SCS, the RB indices of the first PRB set may be in the form 0, 2, 4, 6, ..., and the RB indices of the second PRB set may be in the form 1, 3, 5, .... For example, for 60 kHz SCS, the RB indices of the first PRB set may be in the form 0, 3, 6, 9, ..., the RB indices of the second PRB set may be in the form 1, 4, 7, ..., and the RB indices of the third PRB set may be in the form 2, 5, 8, .... For example, the above scheme may maximize the transmit power according to the PSD requirements, but may reduce the amount of resources that can be distinguished, thereby reducing the scheduling flexibility.

For example, the discontinuous PRB set may include two PRBs that satisfy at least the OCB requirement. For example, the PRB set may include at least an RB index N and an RB index N+M. For example, the value of the M may be (pre-)configured to satisfy the OCB requirement. For example, the value of M may be a minimum value of a value that satisfies the OCB requirement. For example, when the size of the RB set is P, the value of M may be a value that is a ceiled value of P*0.8 minus 1. For example, the value of N may be a set of values such that both N and N+M exist within a specific RB set. For example, the number of values of N may be a ceiled value of P-0.8*P or a discard value of 0.2*P, or may be less than the above values. For example, the number of N or the candidate values of N may be (pre-)configured per resource pool and/or per SL channel.

In addition to the two PRBs for the OCB requirement in the PRB set, a UE may further include additional PRBs to overcome the transmit power restrictions under the PSD requirement. For example, the PRBs comprising the RB set may be divided into a plurality of RB subsets whose number is P-0.8*P rounded up or P-0.2*P rounded down, and the discontinuous PRB set may be configured to include one RB from each RB subset for all or some of the RB subsets. For example, the PRB gap between the RB subsets may be zero or a non-zero integer value, and whether the PRB gap exists and its value may be configured differently according to the size of the RB set. For example, the discontinuous PRB set may be configured with an RB index N, a discard value of N+0.2*P, a discard value of N+0.2*P*2, ..., N+M.

For example, when deriving a PSFCH resource from a PSSCH resource, and/or when a PSFCH resource has the discontinuous PRB set as a frequency resource, the scheme for deriving an RB for a PSFCH from a subchannel index of a PSSCH and a PSSCH slot index may be extended to a scheme for deriving the PRB set for a PSFCH.

Meanwhile, in PSFCH transmission, a UE may use a single or multiple common RBs for the actual transmission in addition to the PSFCH RBs (for SL HARQ-ACK feedback) to meet the OCB requirements. For example, a UE may use the minimum number of common RBs that can fultill the OCB requirements for a transmission. For example, the common RB(or its location) selected according to the actual location of the PSFCH RB described above may be different. For example, a UE may not use a common RB additionally for a transmission if the OCB requirement is satisfied when transmitting a plurality of PSFCHs.

For example, if a UE has the capability to transmit up to N PSFCHs simultaneously, the actual maximum number of PSFCH transmissions that can be transmitted simultaneously may change to N-M if the UE uses M common RBs for the transmission.

For example, when a UE selects a PSFCH to transmit, the UE may select a transmission target by preferentially considering the combination of PSFCH transmissions that satisfy the OCB requirements over the selection based on the respective PSFCH SL priorities.

For example, when selecting a PSFCH to transmit, a UE may select a transmission target by preferentially considering a PSFCH transmission combination where the number of common RB usage is minimized that meets the OCB requirements over the selection according to each of PSFCH priorities. For example, a UE may select a PSFCH to be transmitted based on the required number of common RBs.

According to one embodiment of the present disclosure, a UE may allocate a minimal amount of power (e.g., a (pre-)configured power value or a power value according to a (pre-)configured ratio) to common RB(s) or per common RB, and distribute the remaining transmit power equally to the PSFCH transmission (for SL HARQ-ACK feedback).

Meanwhile, when transmitting PSFCH, a UE may use an additional common RB-based interlace for actual transmission in addition to the PSFCH RBs (for SL HARQ-ACK feedback). For example, according to the combination of multiple PSFCHs actually transmitted by a UE, the common RB-based interlace may not be used for the actual transmission, and/or only some of the RBs comprising the common RB-based interlace may be used for the actual transmission. For example, according to the actual PSFCH RB locations, the locations of the RBs comprising the common RB-based interlace used for the transmission may be different.

For example, the maximum number of PSFCH transmissions that can be transmitted simultaneously may be different for a case where a UE is transmitting a common RB-based interlace and for a case where it is not transmitting a common RB-based interlace.

For example, if a UE can transmit up to N PSFCHs simultaneously, the actual maximum number of simultaneously transmitted PSFCHs may change to N-M (e.g., M is 1 or a specific value) when transmitting an interlace based on a common RB.

For example, when a UE selects a PSFCH to transmit, the UE may select a transmission target by preferentially considering a combination of PSFCH transmissions that minimizes the number of RBs used to form a common RB-based interlace to satisfy the OCB requirement, over a selection based on the priority of each PSFCH. Alternatively, for example, the selection of the transmission target may be performed by preferentially considering a combination of PSFCH transmissions that minimizes the number of RBs that form a common RB-based interlace to satisfy the OCB requirement, over a selection based on the respective PSFCH priorities. For example, a UE may select a PSFCH to transmit based on whether a common RB based interlace is required and/or the number of RBs comprising the common RB based interlace whose transmission is required.

For example, a UE may allocate a minimum amount of power (e.g., a (pre-)configured power value or a power value based on a (pre-)configured ratio) among the total transmit power, for a common RB based interlace or for each (actual transmitted) RB that comprises the common RB based interlace, and distribute the remaining transmit power equally to PSFCH transmissions (for SL HARQ-ACK feedback).

Meanwhile, PSFCHs to be transmitted by a UE may be present in multiple RB sets. For example, the common RB for a UE to fulfill the OCB requirement may be all or some of the RBs corresponding to the same interlace index when the PSFCHs to be transmitted by the UE are present in multiple RB sets, and/or when the channel sensing result is IDLE for the multiple RB sets. For example, the RBs (e.g., the common RB for a UE to fulfill the OCB requirement) may belong to the multiple RB sets and/or to a guard band between the multiple RB sets.

For example, if the channel sensing result is BUSY for some of the RB sets described above, RBs corresponding to interlaces that belongs to the guard band between the IDLE RB sets and the BUSY RB sets may not be used for a transmission when a UE transmits PSFCH. For example, if it is present within a shared COT among RB sets whose channel sensing result is IDLE as described above, it may not be used in a transmission when a UE transmits a PSFCH, for all or part of the RBs corresponding to the interlace that belongs to the RB set and/or the guard band adjacent to the RB set. Alternatively, for example, in the case of an RB set that exist within a shared COT among the RB sets whose channel sensing result is IDLE as described above, all or part of the RBs corresponding to (or that is included in) an interlace that belongs to the corresponding RB set and/or the guard band adjacent to the corresponding RB set may not be used by a UE for PSFCH transmission.

In various embodiments of the present disclosure, a transmission based on a common RB and/or a common RB-based interlace may be omitted if a UE transmits a PSFCH through COT sharing. For example, a UE may only transmit a transmission based on a common RB and/or a common RB-based interlace only if it transmits a PSFCH according to a type 1 channel access procedure (CAP).

For example, when transmitting PSFCH, a UE may transmit using PRBs corresponding to a specific interlace. Here, for example, some of the PRBs (e.g., 1 or 2 RBs, or a smaller number of RBs) may be used for SL HARQ-ACK feedback. For example, (some of the) PRB locations may be derived from the PSSCH resources corresponding to the SL HARQ-ACK feedback. For example, the remaining PRBs (other than the PRBs whose locations are derived among the PRBs corresponding to the specific interlace) may be used for signal transmission unrelated to the SL HARQ-ACK feedback. The above operation may be performed because simultaneous transmission over a specific interlace and separate PRBs FDMed thereto may result in increased PAPR and/or performance degradation as transmit power is distributed according to PSD requirements.

For example, when a UE transmits PSFCH in an interlace structure, the PSD for the PRB(s) used for SL HARQ-ACK feedback and the other PRB(s) may be configured differently. For example, the PSD for the PRB(s) used for SL HARQ-ACK feedback may be configured larger than the PSD for the other PRB(s).

For example, a UE may determine the PRB(s) used for SL HARQ-ACK feedback based on the PSSCH resources (slots and/or subchannels), and may use all or part of the interlace to which the PRB(s) belong for PSFCH transmission. For example, among the PRBs belonging to the interlace, a UE may exclude PRBs that it determines, based on the received SCI, will be used by other UEs for SL HARQ-ACK feedback transmission purposes from PSFCH transmission.

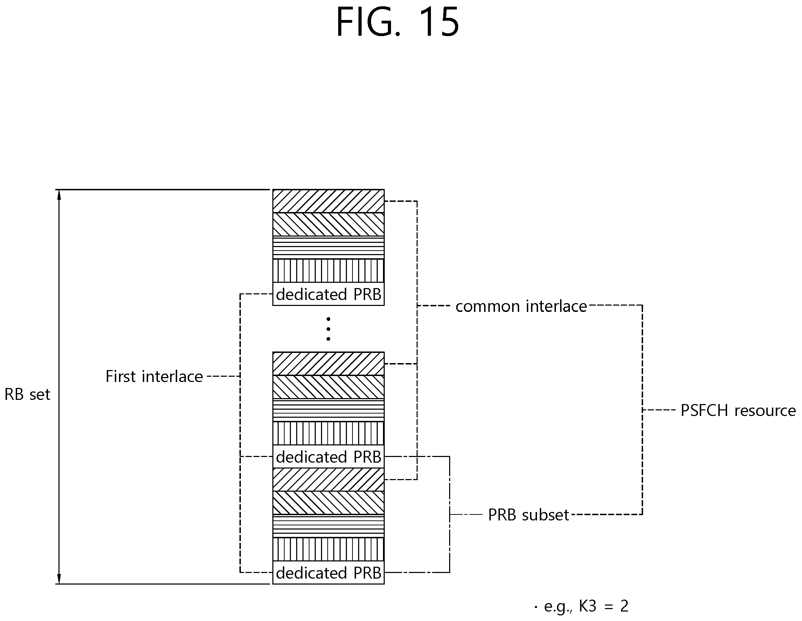

FIG. 15 shows the structure of a PSFCH resource on an unlicensed band, according to one embodiment of the present disclosure. The embodiment of FIG. 15 may be combined with various embodiments of the present disclosure.

Referring to FIG. 15, an RB set of an interlace structure is shown. For example, the first interlace may comprise N PRBs, where N is an integer multiple of K3. For example, K3 may be an integer (e.g., K3=2). For example, the first interlace may comprise N PRB subsets. For example, the first interlace and the common interlace may be included in the same RB set.

For example, a PSFCH resource may include the common interlace and the first interlace. For example, at least one PSFCH transmission may be performed based on the PSFCH resource, and each PSFCH transmission may be mapped to one PRB subset. That is, each PSFCH transmission may be transmitted based on a common interlace and a mapped PRB subset.

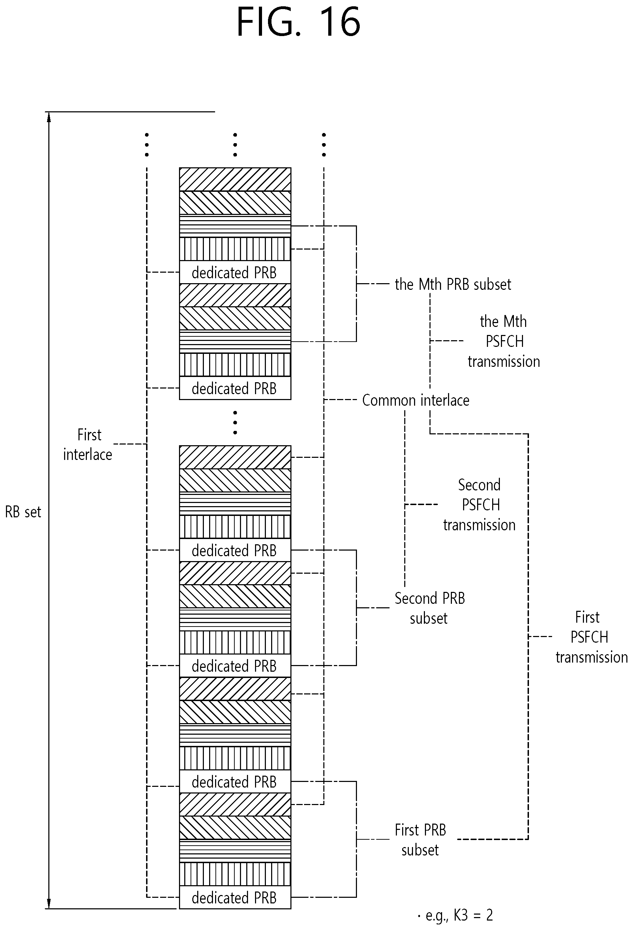

FIG. 16 shows PRB subsets to which at least one PSSCH is mapped on an unlicensed band, according to one embodiment of the present disclosure. The embodiment of FIG. 16 may be combined with various embodiments of the present disclosure.

Referring to FIG. 16, a common interlace and a first interlace comprising N PRB subsets are shown. For example, each PRB subset may consist of K3 consecutive PRBs (e.g., K3=2). For example, if a UE needs to perform M PSFCH transmissions for M PSSCHs, the M PSSCHs may be mapped to M PRB subsets. That is, for example, a first PRB subset mapped to the first PSSCH may be used to transmit a first HARQ feedback for a first PSSCH, a second PRB subset may be used to transmit a second HARQ feedback for a second PSSCH, and so on. In other words, each PSFCH transmission may be transmitted based on a common interlace and a mapped PRB subset.

The operation described above may be performed based on the features described in the table below.

[Table 18]

| Regarding PSFCH transmission with 15 kHz and 30 kHz SCS: |
| --- |
| • One of the following alternatives is (pre-)configured: <br>     ○ Alt 1-1b: each PSFCH transmission occupies 1 common interlace and K3 dedicated PRB(s) <br>        ■ K3 is (pre-)configured <br>          • Value range for K3 at least includes {1, 2, 5} <br>        ■ K3 dedicated PRB(s) are on the same interlace <br>        ■ There can be some guardband PRB(s) between common PRB and dedicated PRB <br>          • FFS details, e.g., whether/how to derive the number of guardband PRB(s), whether to additionally introduce a (pre-)configured gap (including 0), or whether this can be satisfied by (pre-)configuration and there is no additional specification impact (e.g., setting proper bit values in bitmap for PSFCH PRB allocation), etc. <br>          • FFS whether to additionally introduce guardband RE between common PRB and dedicated PRB |

(continued)

> ■ On the K3 dedicated PRB(s), multiple CS pairs can be used as in legacy NR SL PSFCH transmission
> ■ When a PRB of common interlace and a dedicated PRB locate within the same 1 MHz bandwidth, UE only transmits on the dedicated PRB subject to meeting OCB requirements
> ■ FFS: whether to reduce power on common PRBs
> ○ Alt 2-3a: each PSFCH transmission occupies 1 dedicated interlace
> • PSSCH transmissions on non-overlapped resources are mapped to orthogonal dedicated PRBs for PSFCH transmission
> • FFS: whether or not to support PRB-level cyclic shift hopping as in NR-U to reduce PAPR
> • FFS: whether to drop common PRBs if the dedicated PRBs can already satisfy OCB requirement

[Table 19]

> Regarding PSFCH transmission,
> • For "*Alt 1-1b: each PSFCH transmission occupies 1 common interlace and K3 dedicated PRB(s)*"
> ○ Cyclic shift on each of K3 dedicated PRB(s) is the same
> ○ Cyclic shift on each PRB of common interlace is up to UE implementation
> • For "*Alt 2-3a: each PSFCH transmission occupies 1 dedicated interlace*"
> ○ Support PRB-level cyclic shift hopping as in NR-U to reduce PAPR

[Table 20]

> In "*Alt 1-1b: each PSFCH transmission occupies 1 common interlace and K3 dedicated PRB(s)*", regarding common interlace, index of common interlace is (pre-)configured per resource pool.

[Table 21]

> In "*Alt 1-1b: each PSFCH transmission occupies 1 common interlace and K3 dedicated PRB(s)*", regarding mapping between PSSCH and K3 dedicated PRB(s):
> • Alt 1: Map to a dedicated PRB subset
> ○ Within one RB set, for mapping between "one sub-channel on one slot" to "PRBs for PSFCH"
> ■ Step 1: For $n^{th}$ PSFCH occasion, UE determines the (pre-)configured dedicated PRB set set#n
> • $1 \leq n \leq N$, N refers to "*one PSCCH/PSSCH transmission has N associated candidate PSFCH occasion(s)*"
> ■ Step 2: Index dedicated PRBs in set#n, based on PRB index in an interlace first and interlace index second rule
> ■ Step 3: After indexing in Step 2, every K3 dedicated PRBs forms a dedicated PRB subset
> • The total number of dedicated PRB subsets is $M_{RBSet}^{PSFCH,subset}(i)$, and UE expects that $M_{RBSet}^{PSFCH,subset}(i)$ is a multiple of $(N_{SubCH}^{RBSet} \cdot N_{PSSCH}^{PSFCH})$.
> ○ $N_{SubCH}^{RBSet}$ is the number of sub-channels within one RB set
> ○ $N_{PSSCH}^{PSFCH}$ is the (pre-)configured PSFCH periodicity
> ○ i is RB set index
> ■ Step 4: Legacy PSSCH-PSFCH mapping is reused with changes that "one sub-channel on one slot" is mapped to one or multiple dedicated PRB subset(s) above
> • Note: "*On the K3 dedicated PRB(s), multiple CS pairs can be used as in legacy NR SL PSFCH transmission*" as per previous agreement
> • Let $M_{RBSet}^{PSFCH,subset}(i)$ denote the number of dedicated PRB subset(s) for "one sub-channel on one slot" on RB set i, i.e.,
> ○ $M_{subch,slot}^{PSFCH,subset} = M_{RBSet}^{PSFCH,subset}(i)/(N_{SubCH}^{RBSet} \cdot N_{PSSCH}^{PSFCH})$
> ○ For a PSCCH/PSSCH transmission, UE determines PSFCH resources as below

(continued)

■ For this PSCCH/PSSCH transmission, the total number of PSFCH resources is

$R_{PRB\ subset,CS}^{PSFCH} = X \cdot N_{CS}^{PSFCH}$ , where $N_{CS}^{PSFCH}$ is the number of (pre-)configured cyclic shift pairs

• if *sl-PSFCH-CandidateResourceType* is configured as *startSubCH,*

○ $N_{type}^{PSFCH} = 1$

○ $X = M_{subch,slot}^{PSFCH,subset}(i)$

○ and the $M_{subch,slot}^{PSFCH,subset}(i)$ dedicated PRB subset(s) are associated with the lowest sub-channel index of lowest RB set of the corresponding PSSCH

• if *sl-PSFCH-CandidateResourceType* is configured as *allocSubCH,*

○ $N_{type}^{PSFCH} = N_{subch}^{PSSCH}$

○ X is the total number of all dedicated PRB subset(s) corresponding all allocated sub-channels on all allocated RB sets of the corresponding PSSCH

○ and the X dedicated PRB subset(s) are associated with the $N_{subch}^{PSSCH}$ sub-channels of the corresponding PSSCH, where $N_{subch}^{PSSCH}$ is the total number of all allocated sub-channels on all allocated RB sets of the corresponding PSSCH

■ The PSFCH resources are indexed according to dedicated PRB subset(s) first, RB set second, cyclic shift pair index third rule.

• The PSFCH resources are within the RB set(s) of PSCCH/PSSCH transmission

■ UE determines an index of a PSFCH resource for a PSFCH transmission with HARQ-ACK information in response to a PSSCH reception as $(P_{ID} + M_{ID}) mod\ R_{PRB\ subset,CS}^{PSFCH}$ , where $P_{ID}$, $M_{ID}$ are same as legacy

• UE expects the number of available dedicated PRBs based on (pre-)configured bitmap *sl-PSFCH-RB-Set* within one interlace within one RB set is an integer multiple of K3

[Table 22]

For operation with shared spectrum channel access, when *sl-PSFCH-Type = 'type2'* and within RB-set *k*, a UE determines a subset of PRBs in a first interlace and, based on *sl-PSFCH-RB-Set,* a subset of $N_{\mathrm{PRB}}^{\mathrm{PSFCH}}$ PRBs in a second interlace for a PSFCH transmission with HARQ-ACK information in a resource pool. An index of the first interlace is provided by *sl-PSFCH-Type2-CommonInterlace.* The $N_{\mathrm{PRB}}^{\mathrm{PSFCH}}$ PRBs in the second interlace are provided by *sl-PSFCH-Type2-DedicatedPRB* where, for the n-th candidate PSFCH transmission occasion, $1 \le n \le N_{\mathrm{occasion}}^{\mathrm{PSFCH}}$ , and for each interlace *l*, the UE determines $M_{\mathrm{PRB},k,l}^{\mathrm{PSFCH},n}$ PRBs based on *sl-PSFCH-RB-Set.* The UE expects that $M_{\mathrm{PRB},k,l}^{\mathrm{PSFCH},n}$ is a multiple of $N_{\mathrm{PRB}}^{\mathrm{PSFCH}}$ . For interlace *l*, the UE determines a PRB subset with index s to include PRBs $\{N_{\mathrm{PRB}}^{\mathrm{PSFCH}} \cdot s, N_{\mathrm{PRB}}^{\mathrm{PSFCH}} \cdot s + 1, ..., N_{\mathrm{PRB}}^{\mathrm{PSFCH}} \cdot (s+1) - 1\},\ 0 \le s \le M_{\mathrm{PRB},k,l}^{\mathrm{PSFCH},n}/N_{\mathrm{PRB}}^{\mathrm{PSFCH}} - 1$ . The UE determines the $M_{\mathrm{subset},k}^{\mathrm{PSFCH},n}$ PRB subsets by ordering the PRB subsets first in an ascending order of PRB subset index within an subset,k interlace and second in ascending order of interlace index. For a number of $N_{\mathrm{subch}}^{k}$ sub-channels in RB-set k and a number of slots for PSSCH transmissions that is not larger than $N_{\mathrm{PSSCH}}^{\mathrm{PSFCH}}$ and is associated with a slot for PSFCH transmission, the UE allocates the

$\{(i + j \cdot N_{\mathrm{PSSCH}}^{\mathrm{PSFCH}}) \cdot M_{\mathrm{subch,slot},k}^{\mathrm{PSFCH},n}, (i + j \cdot N_{\mathrm{PSSCH}}^{\mathrm{PSFCH}}) \cdot M_{\mathrm{subch,slot},k}^{\mathrm{PSFCH},n} + 1, ..., (i + 1 + j \cdot N_{\mathrm{PSSCH}}^{\mathrm{PSFCH}}) \cdot M_{\mathrm{subch,slot},k}^{\mathrm{PSFCH},n} - 1\}$ PRB subsets from the $M_{\mathrm{subset},k}^{\mathrm{PSFCH},n}$ PRB subsets to slot i among the slots for PSSCH transmissions that are associated with the slot and sub-channel j for PSFCH transmissions, where $M_{\mathrm{subch,slot},k}^{\mathrm{PSFCH},n} = M_{\mathrm{subset},k}^{\mathrm{PSFCH},n}/(N_{\mathrm{subch}}^{k} \cdot N_{\mathrm{PSSCH}}^{\mathrm{PSFCH}})$ and $0 \le i < N_{\mathrm{PSSCH}}^{\mathrm{PSFCH}},\ 0 \le j < N_{\mathrm{subch}}^{k}$ . The allocation starts in an ascending order of i and continues in an ascending order of j. The UE expects that $M_{\mathrm{subset},k}^{\mathrm{PSFCH},n}$ is a multiple of $N_{\mathrm{subch}}^{k} \cdot N_{\mathrm{PSSCH}}^{\mathrm{PSFCH}}$ .

Meanwhile, since different UEs use different PRBs for SL HARQ-ACK feedback, SL HARQ-ACK feedback signaling and common signaling for OCB requirements may overlap on the same PRB, in which case separate processing may be required to avoid resource conflicts.

For example, when a UE transmits a PSFCH in an interlace structure, the sequence mapped to the PRB(s) used for SL HARQ-ACK feedback and the sequence mapped to the other PRB(s) may have different sequence ID values. For example, the sequence ID values may be (pre-)configured for sequences for the purpose of SL HARQ-ACK feedback transmission and for other sequences (to satisfy OCB requirements).

For example, when a UE transmits PSFCH to an interlace structure, the sequence that is mapped to the PRB(s) used for SL HARQ-ACK feedback may also be used for mapping to other PRB(s).

For example, when a UE transmits a PSFCH in an interlace structure, the cyclic shift value(s) that may be used for the PRB(s) used for SL HARQ-ACK feedback (according to ACK or NACK) may be distinguished from the cyclic shift value(s) that are (or may be) applied to the other PRB(s). This may be to ensure that when the same PRB is used by a specific UE for SL HARQ-ACK feedback transmission and by another UE for other purposes, the different sequences are distinguished, at least via the CDM. For example, in the above, the UE may select a combination of cyclic shift values for the PRB(s) other than for the purpose of SL HARQ-ACK feedback transmission, such that the PAPR for PSFCH transmission is lower.

For example, a UE may expect that the candidate set of PRBs used for SL HARQ-ACK feedback is (pre-)configured to belong to a specific interlace(s). For example, the specific interlace(s) may be used by a UE for PSFCH transmission. For example, the candidate set of PRBs used for SL HARQ-ACK feedback may be (pre-)configured to belong to the specific interlace(s).

For example, when a UE transmits a PSFCH in an interlace structure, information for the number of PRBs and/or PRB locations used for SL HARQ-ACK feedback may be (pre-)configured. For example, if the number of PRBs used for the SL HARQ-ACK feedback is multiple, a UE may derive a second PRB from the first PRB after selecting a first PRB from the PSSCH resource corresponding to the SL HARQ-ACK feedback, and/or derive a plurality of PRBs from the PSSCH resource. For example, the lowest PRB to the highest PRB of the PRBs used for the SL HARQ-ACK feedback may cover at least 2 MHz.

Meanwhile, it may be necessary to adjust the transmit power during sidelink transmission according to the PSD requirements. For example, after calculating the sidelink transmit power requirement, the actual sidelink transmit power may be scaled down (by a transmitting UE) according to the PSD requirements. For example, when adjusting the sidelink transmit power according to the above PSD requirements, the PSD may be maintained for PRBs belonging to the same subchannel or the same interlace or the same RB set. For example, when adjusting the sidelink transmit power according to the above PSD requirements, the PSD may be different in units of subchannels, interlaces, or RB sets. For example, the PSD may be different in units of PSFCH PRBs or PSFCH transmissions when adjusting the sidelink transmit power according to the above PSD requirements.

For example, after the required transmit power for the simultaneous transmission of multiple PSFCHs and the number of PSFCHs that may be transmitted simultaneously has been calculated, the sidelink transmit power may be scaled down (by a UE) according to the PSD requirements. For example, after the required transmit power for a single PSFCH is calculated, the sidelink transmit power may be scaled down (by a UE) according to the PSD requirements, and/or after that, the required transmit power for a multiple PSFCH transmissions and the number of PSFCH transmissions that may be transmitted simultaneously may be determined (by a UE). For example, the transmit power for multiple PSFCH transmissions may be scaled down equally when adjusting the sidelink transmit power according to the above PSD requirements. For example, when adjusting the sidelink transmit power according to the above PSD requirements, the transmit power for multiple PSFCH transmissions may be scaled down unequally in units of PSFCH transmissions and/or RB sets.

For example, when calculating the required transmit power for a sidelink transmission according to PSD requirements, a UE may adjust and/or apply the nominal power (P0 value) and/or additional offset values differently.

In various embodiments of the present disclosure, the RB index may be a PRB index, or may be a CRB index.

In various embodiments of the present disclosure, the methods described for each SL channel are not limited to the respective stated SL channel and may be extended and applied to other SL channels.

In various embodiments of the present disclosure, the various methods may be applied differently according to the size of the subcarrier space.

In various embodiments of the present disclosure, the various methods may be applied differently according to the type of sidelink channel.

In various embodiments of the present disclosure, the various methods may be applied differently according to the CAPC value and/or according to the SL priority value.

In various embodiments of the present disclosure, the various methods may be applied differently according to an RB set and/or according to the size of the RB set.

In various embodiments of the present disclosure, the various methods may be applied differently inside the COT and/or outside the COT.

The proposed method may be applied to the device described below. First, a processor 202 of a receiving UE may configure at least one BWP. Then, a processor 202 of a receiving UE may control a transceiver 206 of the receiving UE to receive a sidelink-related physical channel and/or a sidelink-related reference signal from a transmitting UE over at least one BWP.

On the other hand, an SL UE may not be able to perform reception operations while performing transmission, and may also not be able to perform channel sensing operations during the above time interval. For example, if a UE further excludes the LBT interval of another UE's reserved resource from resource selection, it may be difficult to accurately determine the LBT interval of the corresponding UE if the other UE is performing type 1 channel sensing.

For example, within the half-duplex restriction interval, the channel sensing result may be assumed to be a specific (pre-configured) result value, or the channel sensing interval may be extended by the restriction interval.

For example, in resource selection, if a resource is further excluded by an LBT interval before and after the reserved resource of another UE, the LBT interval may be determined by the UE implementation, or a (pre-)configured value according to the CAPC may be used as the LBT interval.

According to embodiments of the present disclosure, a UE may efficiently perform channel sensing operations even in half-duplex situations and may flexibly consider LBT intervals when (re)selecting resources.

According to the prior art, there is a problem that PSFCH transmission cannot be performed in an unlicensed band because the requirements of the unlicensed band are not considered in the determination of the PSFCH resource. According to an embodiment of the present disclosure, the PSFCH resource may satisfy the OCB requirements of communication on an unlicensed band, etc. and has the effect of enabling a PSFCH resource mapping suitable for the interlace structure of the unlicensed band.

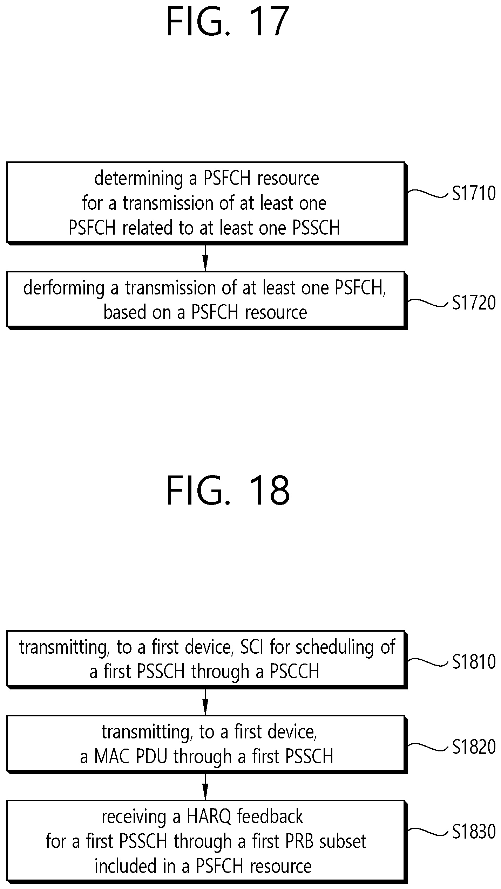

FIG. 17 shows a procedure for a first device to perform wireless communication, according to one embodiment of the present disclosure. The embodiment of FIG. 17 may be combined with various embodiments of the present disclosure.

Referring to FIG. 17, in step S1710, a first device may determine a physical sidelink feedback channel, PSFCH, resource for a transmission of at least one PSFCH related to at least one physical sidelink shared channel, PSSCH. For example, the PSFCH resource may include at least one dedicated physical resource block, PRB, included in a first interlace and a common interlace, the at least one PSSCH may be mapped to at least one PRB subset, and each of the at least one PRB subset may include K3 PRBs included in the at least one dedicated PRB. In step S1720, the first device may perform the transmission of the at least one PSFCH, based on the PSFCH resource.

For example, a number of the at least one dedicated PRB may be an integer multiple if K3.

For example, the common interlace and the first interlace may be included in a first RB set.

For example, the PSFCH resource may be included in a second RB set different from the first RB set and the first RB set.

For example, the PSFCH resource may include a second common interlace of the same index as the common interlace, included in the second RB set.

For example, the common interlace or a first resource included in the second common interlace may be not used in the transmission of the at least one PSFCH, based on a result of channel sensing for the first RB set being different from a result of channel sensing for the second RB set.

For example, an RB set in which the at least one PSSCH is transmitted and an RB set in which the PSFCH resource may be included are the same.

For example, a PRB to which the at least one PSSCH is not mapped among the at least one dedicated PRB may be not used in the transmission of the at least one PSFCH.

For example, a first sequence mapped to a PRB to which the at least one PSSCH is mapped may be different from a second sequence mapped to a PRB to which the at least one PSSCH is not mapped.

For example, a first cyclic shift applied to a PRB to which the at least one PSSCH is mapped may be different from a second cyclic shift applied to a PRB to which the at least one PSSCH is not mapped.

For example, the K3 may be pre-configured.

For example, a frequency range of the at least one PRB subset may be greater than or equal to 2 MHz.

For example, additionally, the first device may adjust transmit power for the transmission of the at least one PSFCH, based on a power spectral density, PSD, requirement. For example, transmit power related to each of the at least one dedicated PRB may be adjusted in a unit of interlace.

The embodiments described above may be applied to various devices described below. First, a processor 102 of a first device 100 may determine a physical sidelink feedback channel, PSFCH, resource for a transmission of at least one PSFCH related to at least one physical sidelink shared channel, PSSCH. For example, the PSFCH resource may include at least one dedicated physical resource block, PRB, included in a first interlace and a common interlace, the at least one PSSCH may be mapped to at least one PRB subset, and each of the at least one PRB subset may include K3 PRBs included in the at least one dedicated PRB. And, the processor 102 of the first device may control a transceiver 106 to perform the transmission of the at least one PSFCH, based on the PSFCH resource.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: determining a physical sidelink feedback channel, PSFCH, resource for a transmission of at least one PSFCH related to at least one physical sidelink shared channel, PSSCH, wherein the PSFCH resource may include at least one dedicated physical resource block, PRB, included in a first interlace and a common interlace, wherein the at least one PSSCH may be mapped to at least one PRB subset, and wherein each of the at least one PRB subset may include K3 PRBs included in the at least one dedicated PRB; and performing the transmission of the at least one PSFCH, based on the PSFCH resource.

For example, a number of the at least one dedicated PRB may be an integer multiple if K3.

For example, the common interlace and the first interlace may be included in a first RB set.

For example, the PSFCH resource may be included in a second RB set different from the first RB set and the first RB set.

For example, the PSFCH resource may include a second common interlace of the same index as the common interlace, included in the second RB set.

For example, the common interlace or a first resource included in the second common interlace may be not used in the transmission of the at least one PSFCH, based on a result of channel sensing for the first RB set being different from a result of channel sensing for the second RB set.

For example, an RB set in which the at least one PSSCH is transmitted and an RB set in which the PSFCH resource may be included are the same.

For example, a PRB to which the at least one PSSCH is not mapped among the at least one dedicated PRB may be not used in the transmission of the at least one PSFCH.

For example, a first sequence mapped to a PRB to which the at least one PSSCH is mapped may be different from a second sequence mapped to a PRB to which the at least one PSSCH is not mapped.

For example, a first cyclic shift applied to a PRB to which the at least one PSSCH is mapped may be different from a second cyclic shift applied to a PRB to which the at least one PSSCH is not mapped.

For example, the K3 may be pre-configured.

For example, a frequency range of the at least one PRB subset may be greater than or equal to 2 MHz.

For example, additionally, the operations further comprise: adjust transmitting power for the transmission of the at least one PSFCH, based on a power spectral density, PSD, requirement. For example, transmit power related to each of the at least one dedicated PRB may be adjusted in a unit of interlace.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: determining a physical sidelink feedback channel, PSFCH, resource for a transmission of at least one PSFCH related to at least one physical sidelink shared channel, PSSCH, wherein the PSFCH resource ,au include at least one dedicated physical resource block, PRB, included in a first interlace and a common interlace, wherein the at least one PSSCH may be mapped to at least one PRB subset, and wherein each of the at least one PRB subset may include K3 PRBs included in the at least one dedicated PRB; and performing the transmission of the at least one PSFCH, based on the PSFCH resource.

According to an embodiment of the present disclosure, a non-transitory computer-readable storage medium storing instructions may be proposed. For example, the instructions, based on being executed, may cause a first device to: determine a physical sidelink feedback channel, PSFCH, resource for a transmission of at least one PSFCH related to at least one physical sidelink shared channel, PSSCH, wherein the PSFCH resource may include at least one dedicated physical resource block, PRB, included in a first interlace and a common interlace, wherein the at least one PSSCH may be mapped to at least one PRB subset, and wherein each of the at least one PRB subset may include K3 PRBs included in the at least one dedicated PRB; and perform the transmission of the at least one PSFCH, based on the PSFCH resource.

FIG. 18 shows a procedure for a second device to perform wireless communication, according to one embodiment of the present disclosure. The embodiment of FIG. 18 may be combined with various embodiments of the present disclosure.

Referring to FIG. 18, in step S1810, a second device may transmit, to a first device, sidelink control information, SCI, for scheduling of a first physical sidelink shared channel, PSSCH, through a physical sidelink control channel, PSCCH. In step S1820, the second device may transmit, to the first device, a medium access control, MAC, protocol data unit, PDU, through the first PSSCH. In step S1830, the second device may receive a hybrid automatic repeat request, HARQ, feedback for the first PSSCH through a first physical resource block, PRB, subset included in a physical sidelink feedback channel, PSFCH, resource. For example, the first PSSCH may be mapped to the first PRB subset, the first PRB subset may include K3 PRBs included in at least one dedicated PRB, and the PSFCH resource may include the at least dedicated PRB included in a first interlace and a common interlace.

For example, a number of the at least one dedicated PRB may be an integer multiple of K3.

The embodiments described above may be applied to various devices described below. First, a processor 202 of a second device 200 may control a transceiver 206 to transmit, to a first device 100, sidelink control information, SCI, for scheduling of a first physical sidelink shared channel, PSSCH, through a physical sidelink control channel, PSCCH. And, the processor 202 of the second device 200 may control the transceiver 206 to transmit, to the first device 100, a medium access control, MAC, protocol data unit, PDU, through the first PSSCH. And, the processor 202 of the second device 200 may control the transceiver 206 to receive a hybrid automatic repeat request, HARQ, feedback for the first PSSCH through a first physical resource block, PRB, subset included in a physical sidelink feedback channel, PSFCH, resource. For example, the first PSSCH may be mapped to the first PRB subset, the first PRB subset may include K3 PRBs included in at least one dedicated PRB, and the PSFCH resource may include the at least dedicated PRB included in a first interlace and a common interlace.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: transmitting, to a first device, sidelink control information, SCI, for scheduling of a first physical sidelink shared channel, PSSCH, through a physical sidelink control channel, PSCCH; transmitting, to the first device, a medium access control, MAC, protocol data unit, PDU, through the first PSSCH; and receiving a hybrid automatic repeat request, HARQ, feedback for the first PSSCH through a first physical resource block, PRB, subset included in a physical sidelink feedback channel, PSFCH, resource, wherein the first PSSCH may be mapped to the first PRB subset, wherein the first PRB subset may include K3 PRBs included in at least one dedicated PRB, and wherein the PSFCH resource may include the at least dedicated PRB included in a first interlace and a common interlace.

For example, a number of the at least one dedicated PRB may be an integer multiple of K3.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-

description, the same reference symbols may denote the same or corresponding hardware blocks, software blocks, or functional blocks unless described otherwise.

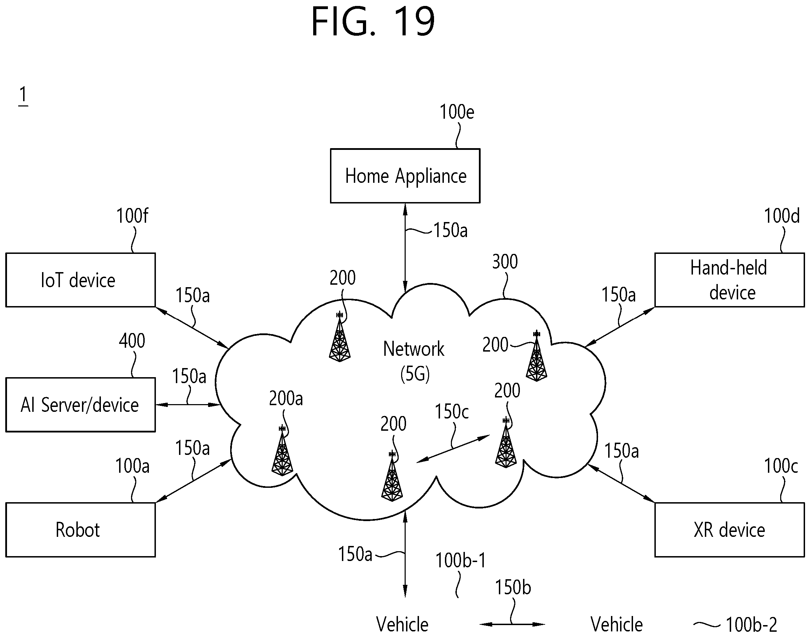

FIG. 19 shows a communication system 1, based on an embodiment of the present disclosure. The embodiment of FIG. 19 may be combined with various embodiments of the present disclosure.

Referring to FIG. 19, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2VyVehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

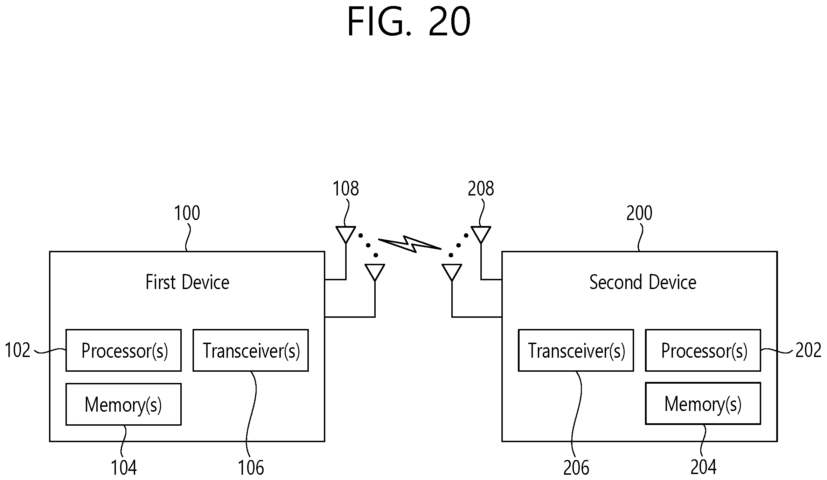

FIG. 20 shows wireless devices, based on an embodiment of the present disclosure. The embodiment of FIG. 20 may be combined with various embodiments of the present disclosure.

Referring to FIG. 20, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 19.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

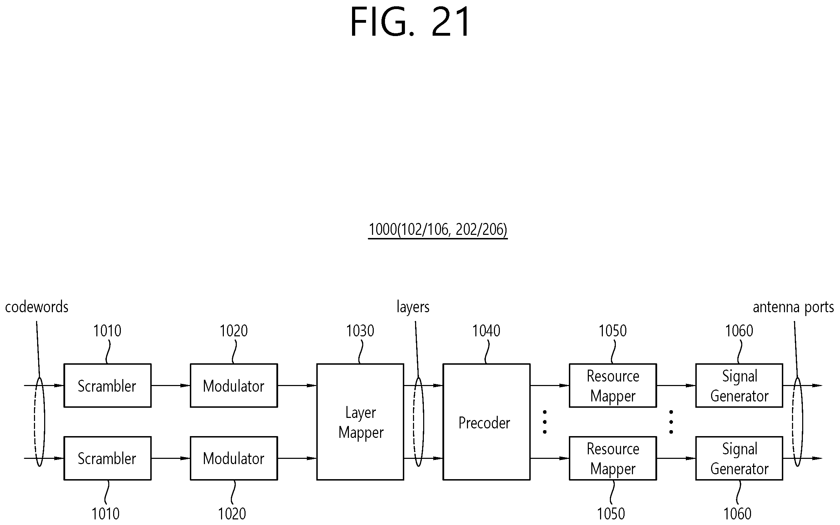

FIG. 21 shows a signal process circuit for a transmission signal, based on an embodiment of the present disclosure. The embodiment of FIG. 21 may be combined with various embodiments of the present disclosure.

Referring to FIG. 21, a signal processing circuit 1000 may include scramblers 1010, modulators 1020, a layer mapper 1030, a precoder 1040, resource mappers 1050, and signal generators 1060. An operation/function of FIG. 21 may be performed, without being limited to, the processors 102 and 202 and/or the transceivers 106 and 206 of FIG. 20. Hardware elements of FIG. 21 may be implemented by the processors 102 and 202 and/or the transceivers 106 and 206 of FIG. 20. For example, blocks 1010 to 1060 may be implemented by the processors 102 and 202 of FIG. 20. Alternatively, the blocks 1010 to 1050 may be implemented by the processors 102 and 202 of FIG. 20 and the block 1060 may be implemented by the transceivers 106 and 206 of FIG. 20.

Codewords may be converted into radio signals via the signal processing circuit 1000 of FIG. 21. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 21. For example, the wireless devices (e.g., 100 and 200 of FIG. 20) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

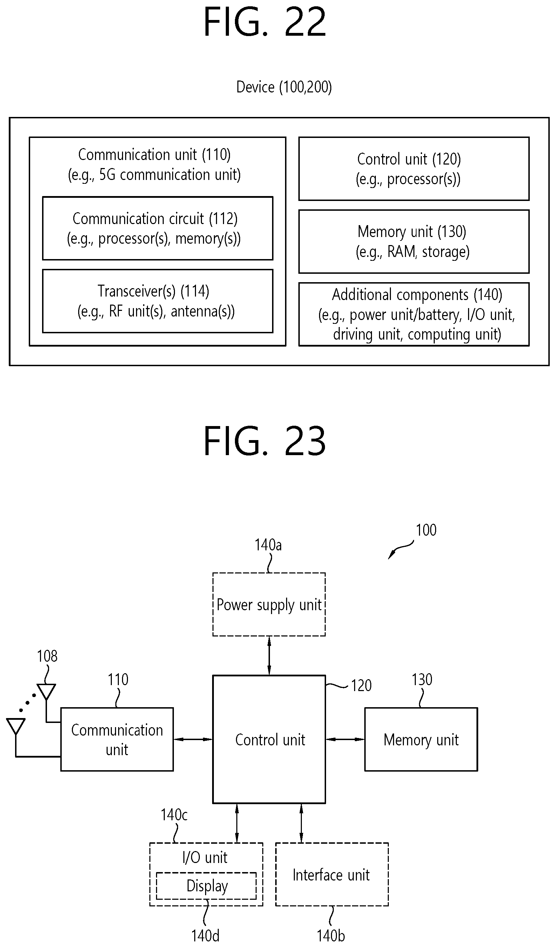

FIG. 22 shows another example of a wireless device, based on an embodiment of the present disclosure. The wireless device may be implemented in various forms according to a use-case/service (refer to FIG. 19). The embodiment of FIG. 22 may be combined with various embodiments of the present disclosure.

Referring to FIG. 22, wireless devices 100 and 200 may correspond to the wireless devices 100 and 200 of FIG. 20 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 20. For example, the transceiver(s) 114 may include the one or more transceivers 106 and 206 and/or the one or more antennas 108 and 208 of FIG. 20. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 19), the vehicles (100b-1 and 100b-2 of FIG. 19), the XR device (100c of FIG. 19), the hand-held device (100d of FIG. 19), the home appliance (100e of FIG. 19), the IoT device (100f of FIG. 19), a digital broadcast terminal, a hologram device, a public safety device, an MTC device, a medicine device, a fintech device (or a finance device), a security device, a climate/environment device, the AI server/device (400 of FIG. 19), the BSs (200 of FIG. 19), a network node, etc. The wireless device may be used in a mobile or fixed place according to a use-example/service.

In FIG. 22, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 22 will be described in detail with reference to the drawings.

FIG. 23 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 23 may be combined with various embodiments of the present disclosure.

Referring to FIG. 23, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 22, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

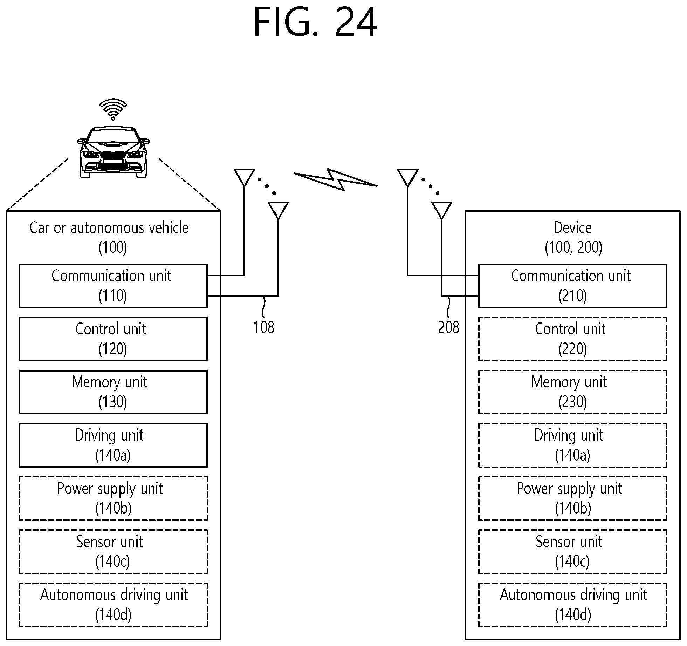

FIG. 24 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 24 may be combined with various embodiments of the present disclosure.

Referring to FIG. 24, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 22, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1.    A method for performing, by a first device, wireless communication, the method comprising:

determining a physical sidelink feedback channel, PSFCH, resource for a transmission of at least one PSFCH related to at least one physical sidelink shared channel, PSSCH,

wherein the PSFCH resource includes at least one dedicated physical resource block, PRB, included in a first interlace and a common interlace,

wherein the at least one PSSCH is mapped to at least one PRB subset, and

wherein each of the at least one PRB subset includes K3 PRBs included in the at least one dedicated PRB; and

performing the transmission of the at least one PSFCH, based on the PSFCH resource.

2. The method of claim 1, wherein a number of the at least one dedicated PRB is an integer multiple if K3.

3. The method of claim 1, wherein the common interlace and the first interlace are included in a first RB set.

4. The method of claim 3, wherein the PSFCH resource is included in a second RB set different from the first RB set and the first RB set.

5. The method of claim 4, wherein the PSFCH resource includes a second common interlace of the same index as the common interlace, included in the second RB set.

6. The method of claim 5, wherein the common interlace or a first resource included in the second common interlace is not used in the transmission of the at least one PSFCH, based on a result of channel sensing for the first RB set being different from a result of channel sensing for the second RB set.

7. The method of claim 1, wherein an RB set in which the at least one PSSCH is transmitted and an RB set in which the PSFCH resource is included are the same.

8. The method of claim 1, wherein a PRB to which the at least one PSSCH is not mapped among the at least one dedicated PRB is not used in the transmission of the at least one PSFCH.

9. The method of claim 8, wherein a first sequence mapped to a PRB to which the at least one PSSCH is mapped is different from a second sequence mapped to a PRB to which the at least one PSSCH is not mapped.

10. The method of claim 8, wherein a first cyclic shift applied to a PRB to which the at least one PSSCH is mapped is different from a second cyclic shift applied to a PRB to which the at least one PSSCH is not mapped.

11. The method of claim 1, wherein the K3 is pre-configured.

12. The method of claim 1, wherein a frequency range of the at least one PRB subset is greater than or equal to 2 MHz.

13. The method of claim 1, further comprising:

adjusting transmit power for the transmission of the at least one PSFCH, based on a power spectral density, PSD, requirement,

wherein transmit power related to each of the at least one dedicated PRB is adjusted in a unit of interlace.

14. A first device for performing wireless communication, the first device comprising:

at least one transceiver;

at least one processor; and

at least one memory operably connected to the at least one processor and storing instructions that, based on being executed by the at least one processor, cause the first device to perform operations,

wherein the operations comprise:

determining a physical sidelink feedback channel, PSFCH, resource for a transmission of at least one PSFCH related to at least one physical sidelink shared channel, PSSCH,

wherein the PSFCH resource includes at least one dedicated physical resource block, PRB, included in a first interlace and a common interlace,

wherein the at least one PSSCH is mapped to at least one PRB subset, and

wherein each of the at least one PRB subset includes K3 PRBs included in the at least one dedicated PRB;

and

performing the transmission of the at least one PSFCH, based on the PSFCH resource.

**15.** A device adapted to control a first user equipment, UE, the device comprising:

at least one processor; and
at least one memory operably connected to the at least one processor and storing instructions that, based on being executed by the at least one processor, cause the first UE to perform operations,
wherein the operations comprise:

determining a physical sidelink feedback channel, PSFCH, resource for a transmission of at least one PSFCH related to at least one physical sidelink shared channel, PSSCH,
wherein the PSFCH resource includes at least one dedicated physical resource block, PRB, included in a first interlace and a common interlace,
wherein the at least one PSSCH is mapped to at least one PRB subset, and
wherein each of the at least one PRB subset includes K3 PRBs included in the at least one dedicated PRB; and
performing the transmission of the at least one PSFCH, based on the PSFCH resource.

**16.** A non-transitory computer-readable storage medium storing instructions that, based on being executed, cause a first device to:

determine a physical sidelink feedback channel, PSFCH, resource for a transmission of at least one PSFCH related to at least one physical sidelink shared channel, PSSCH,
wherein the PSFCH resource includes at least one dedicated physical resource block, PRB, included in a first interlace and a common interlace,
wherein the at least one PSSCH is mapped to at least one PRB subset, and
wherein each of the at least one PRB subset includes K3 PRBs included in the at least one dedicated PRB; and
perform the transmission of the at least one PSFCH, based on the PSFCH resource.

**17.** A method for performing, by a second device, wireless communication, the method comprising:

transmitting, to a first device, sidelink control information, SCI, for scheduling of a first physical sidelink shared channel, PSSCH, through a physical sidelink control channel, PSCCH;
transmitting, to the first device, a medium access control, MAC, protocol data unit, PDU, through the first PSSCH; and
receiving a hybrid automatic repeat request, HARQ, feedback for the first PSSCH through a first physical resource block, PRB, subset included in a physical sidelink feedback channel, PSFCH, resource,
wherein the first PSSCH is mapped to the first PRB subset,
wherein the first PRB subset includes K3 PRBs included in at least one dedicated PRB, and
wherein the PSFCH resource includes the at least dedicated PRB included in a first interlace and a common interlace.

**18.** The method of claim 17, wherein a number of the at least one dedicated PRB is an integer multiple of K3.

**19.** A second device for performing wireless communication, the second device comprising:

at least one transceiver;
at least one processor; and
at least one memory operably connected to the at least one processor and storing instructions that, based on being executed by the at least one processor, cause the second device to perform operations,
wherein the operations comprise:

transmitting, to a first device, sidelink control information, SCI, for scheduling of a first physical sidelink shared channel, PSSCH, through a physical sidelink control channel, PSCCH;
transmitting, to the first device, a medium access control, MAC, protocol data unit, PDU, through the first PSSCH; and
receiving a hybrid automatic repeat request, HARQ, feedback for the first PSSCH through a first physical resource block, PRB, subset included in a physical sidelink feedback channel, PSFCH, resource,
wherein the first PSSCH is mapped to the first PRB subset,
wherein the first PRB subset includes K3 PRBs included in at least one dedicated PRB, and
wherein the PSFCH resource includes the at least dedicated PRB included in a first interlace and a common interlace.

20. The second device of claim 19, wherein a number of the at least one dedicated PRB is an integer multiple of K3.

## FIG. 1

# FIG. 2

# FIG. 3

FIG. 4

UE B | SDAP | PDCP | RLC | MAC | PHY

UE A | SDAP | PDCP | RLC | MAC | PHY

PC5-U

(c)

UE B | RRC | PDCP | RLC | MAC | PHY

UE A | RRC | PDCP | RLC | MAC | PHY

PC5-C

(d)

gNB | SDAP | PDCP | RLC | MAC | PHY

UE | SDAP | PDCP | RLC | MAC | PHY

(a)

AMF | NAS

gNB | RRC | PDCP | RLC | MAC | PHY

UE | NAS | RRC | PDCP | RLC | MAC | PHY

(b)

# FIG. 5

··· | One Frame (10ms) | ···

··· | Half-Frame (5ms) | Half-Frame (5ms) | ···

··· | Subframe 0 (1ms) | ··· | Subframe 4 (1ms) | Subframe 5 (1ms) | ··· | Subframe 9 (1ms) | ···

Subframe (1ms)

| 15KHz | Slot 0 (14symbols) |

1ms

| 30KHz | Slot 0 (14symbols) | Slot 1 |

500us

| 60KHz | Slot 0 (14symbols) | Slot 1 | Slot 2 | Slot 3 |

250us

| 120KHz | Slot 0 (14symbols) | Slot 1 | Slot 2 | Slot 3 | Slot 4 | Slot 5 | Slot 6 | Slot 7 |

125us

# FIG. 6

Resource grid

A carrier
(up to 3300 subcarriers,
i.e., 275 RBs)

A BWP

1RB=12 subcarriers

1 RE

1subcarrier

1 symbol

l=0 ···

k=0

EP 4 618 654 A1

# FIG. 7

PRB N3

PRB 1

PRB 0

$N^{size}_{BWP, 2}$

PRB N2

PRB 1

PRB 0

$N^{size}_{BWP, 1}$

PRB N1

PRB 1

PRB 0

$N^{size}_{BWP, 0}$

CRB 0

$N^{start}_{BWP, 0}$

$N^{start}_{BWP, 1}$

$N^{start}_{BWP, 2}$

Carrier
Bandwidth

Freq.

Time

PRB 0 (Point A) in reference resource block

# FIG. 8

(a)                    (b)

# FIG. 9

(a)          (b)          (c)

● : TX UE
⊘ : RX UE

# FIG. 10

(a) Carrier aggregation between L-band and U-band

(b) Standalone U-band(s)

# FIG. 11

# FIG. 12

# FIG. 13

CAP start — S110

Step 1 — S120

Step 4 — S130

YES → CAP ends (S132) → Performing transmission (S134)

NO ↓

Step 2 — S140

Step 3 — S150

YES

NO ↓

Step 5 — S160

Step 6 — S170

NO

YES

# FIG. 14

```
        ┌─────────────────┐
        │    CAP start    │── S210
        └────────┬────────┘
                 │
        ┌────────▼────────┐
        │     Step 1      │── S220
        └────────┬────────┘
                 │         S230
              ◇ Step 4 ◇─────YES────►┌──────────┐────►┌────────────────────────┐
                 │                    │ CAP ends │     │ Performing transmission │
                NO                    └──────────┘     └────────────────────────┘
                 │                       S232                    S234
        ┌────────▼────────┐
        │     Step 2      │── S240
        └────────┬────────┘
                 │         S250
      YES──── ◇ Step 3 ◇
                 │
                NO
                 │
        ┌────────▼────────┐
        │     Step 5      │── S260
        └────────┬────────┘
                 │         S270
      NO──── ◇ Step 6 ◇
                 │
                YES
```

EP 4 618 654 A1

# FIG. 15

- RB set
- First interlace
- dedicated PRB
- common interlace
- PSFCH resource
- dedicated PRB
- PRB subset
- dedicated PRB
- · e.g., K3 = 2

EP 4 618 654 A1

# FIG. 16

# FIG. 17

determining a PSFCH resource
for a transmission of at least one
PSFCH related to at least one PSSCH — S1710

derforming a transmission of at least one PSFCH,
based on a PSFCH resource — S1720

# FIG. 18

transmitting, to a first device, SCI for scheduling of
a first PSSCH through a PSCCH — S1810

transmitting, to a first device,
a MAC PDU through a first PSSCH — S1820

receiving a HARQ feedback
for a first PSSCH through a first PRB subset
included in a PSFCH resource — S1830

# FIG. 19

# FIG. 20

# FIG. 21

1000(102/106, 202/206)

codewords

1010

Scrambler

1020

Modulator

1030

Layer
Mapper

layers

1040

Precoder

1050

Resource
Mapper

1060

Signal
Generator

antenna ports

1010

Scrambler

1020

Modulator

1050

Resource
Mapper

1060

Signal
Generator

# FIG. 22

Device (100,200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 23

59

# FIG. 24

## INTERNATIONAL SEARCH REPORT

| International application No. |
| --- |
| **PCT/KR2023/014818** |

### A. CLASSIFICATION OF SUBJECT MATTER

**H04W 72/04**(2009.01)i; **H04L 1/18**(2006.01)i; **H04L 27/26**(2006.01)i; **H04W 92/18**(2009.01)i; **H04W 74/08**(2009.01)i; **H04W 16/14**(2009.01)i; **H04W 52/34**(2009.01)i

According to International Patent Classification (IPC) or to both national classification and IPC

### B. FIELDS SEARCHED

Minimum documentation searched (classification system followed by classification symbols)

H04W 72/04(2009.01); H04L 5/00(2006.01); H04W 72/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크(sidelink), PSSCH, PSFCH, 인터레이스(interlace), 공통/전용(common/dedicated), PRB

### C. DOCUMENTS CONSIDERED TO BE RELEVANT

| Category* | Citation of document, with indication, where appropriate, of the relevant passages | Relevant to claim No. |
| --- | --- | --- |
| Y<br>A | LG ELECTRONICS. Discussion on physical channel design framework for sidelink on unlicensed spectrum. R1-2205851, 3GPP TSG RAN WG1 Meeting #110. 12 August 2022.<br>See sections 2.1.2 and 2.3. | 1-3,7,11-12,14-20<br>4-6,8-10,13 |
| Y | APPLE. On Physical Channel Design Framework for Sidelink on FR1 Unlicensed Spectrum. R1-2211815, 3GPP TSG RAN WG1 Meeting #111. 07 November 2022.<br>See section 2.3.2. | 1-3,7,11-12,14-20 |
| Y | WO 2022-191576 A1 (LG ELECTRONICS INC.) 15 September 2022 (2022-09-15)<br>See paragraphs [0103]-[0146]; and claims 1-20. | 17-20 |
| A | NOKIA et al. On Physical Channel Design Framework for SL-U. R1-2210828, 3GPP TSG RAN WG1 Meeting #111. 07 November 2022.<br>See section 4. | 1-20 |
| A | WO 2021-217549 A1 (QUALCOMM INCORPORATED et al.) 04 November 2021 (2021-11-04)<br>See paragraphs [0103]-[0104]; and claims 1-13. | 1-20 |

☑ Further documents are listed in the continuation of Box C.      ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **04 January 2024** | **04 January 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/014818** |

| C. | DOCUMENTS CONSIDERED TO BE RELEVANT | |
| --- | --- | --- |
| Category* | Citation of document, with indication, where appropriate, of the relevant passages | Relevant to claim No. |
| PX | SAMSUNG. Summary of email discussions [114-R18-38.213-NR_SL_enh2]. R1-2308778, 3GPP TSG RAN WG1 Meeting #114. 08 September 2023.<br>      See section 2. | 1,14-20 |

**INTERNATIONAL SEARCH REPORT**
Information on patent family members

International application No.

**PCT/KR2023/014818**

| Patent document cited in search report | | | Publication date (day/month/year) | Patent family member(s) | | | Publication date (day/month/year) |
|---|---|---|---|---|---|---|---|
| WO | 2022-191576 | A1 | 15 September 2022 | KR | 10-2023-0156734 | A | 14 November 2023 |
| WO | 2021-217549 | A1 | 04 November 2021 | CN | 115606133 | A | 13 January 2023 |
| | | | | EP | 4144017 | A1 | 08 March 2023 |

Form PCT/ISA/210 (patent family annex) (July 2022)